# EUROPÄISCHE PATENTANMELDUNG

(11) **EP 4 653 144 A1**
(43) Veröffentlichungstag der Anmeldung: **26.11.2025**
(21) Anmeldenummer: 24177715.0
(22) Anmeldetag: 23.05.2024
(51) Int. Cl.: B25C 1/06, F16F 1/00

(54) **VERBUNDSTOFF-ENERGIESPEICHER UND ARBEITSGERÄT MIT VERBUNDSTOFF-ENERGIESPEICHER**

(71) Anmelder: Hilti Aktiengesellschaft, 9494 Schaan (LI)
(72) Erfinder: Dittrich, Tilo, 6800 Feldkirch (AT); Sperrfechter, Thomas, 7214 Grüsch (CH); Wolf, Iwan, 7204 Untervaz (CH); Hasler, Claudio, 9488 Schellenberg (LI); Zemann, Richard, 2100 Korneuburg (AT); Weiler, Thomas, 1050 Wien (AT); Erne, Sandro, 6800 Feldkirch (AT); Franz, Karl, 71570 Oppenweiler (DE)
(74) Vertreter: Hilti Aktiengesellschaft Corporate Intellectual Property

(57) **Zusammenfassung**

Arbeitsgerät, zum Eintreiben eines Befestigungselements in einen Untergrund, umfassend ein Energieübertragungssystem, wobei das Energieübertragungssystem einen Energiespeicher zur Speicherung von mechanischer Energie in dem Arbeitsgerät umfasst, wobei der Energiespeicher eine Biegefeder und ein Verbundmaterial umfasst.

## Beschreibung

Die vorliegende Erfindung betrifft ein Arbeitsgerät zum Eintreiben eines Befestigungselements in einen Untergrund und einen Energiespeicher zur Speicherung von mechanischer Energie in einem Arbeitsgerät. Derartige Arbeitsgeräte verfügen gewöhnlich über eine elektrische Energiequelle - beispielsweise eine elektrische Batterie - und ein Energieübertragungssystem, welches die elektrische Energie aus der elektrischen Batterie in Form von mechanischer Energie auf das Befestigungselement überträgt.

Das Energieübertragungssystem umfasst dabei ein Energieübertragungsband, welches die elektrische Energie in Form von mechanischer Energie in einen Energiespeicher überführt. Der Energiespeicher dient dabei als Zwischenspeicher der mechanischen Energie. Die mechanische Energie wird darauf aus dem Energiespeicher auf ein Energieübertragungselement übertragen, welches die Energie an ein Befestigungselement weitergibt und dieses Befestigungselement dadurch in einen Untergrund eingetrieben wird.

### Hintergrund

Zum Eintreiben von Befestigungselementen benötigt das Arbeitsgerät eine hohe Leistung aus den Batterien. Diese haben eine hohe Energiedichte, können jedoch nur eine sehr begrenzte Leistung bieten. Daher wird bei allen batteriebetriebenen Geräten ein Energiespeicher zur Speicherung von mechanischer Energie benötigt. Der Energiespeicher ermöglicht es die Energie zum Eintreiben von Befestigungselementen in sehr kurzer Zeit freizugeben. Auf diesem Weg kann man die benötigte hohe Leistung erreichen.

Der allgemeine Trend geht in die Richtung batteriebetriebene Geräte auch in Bereiche höherer Eintreibenergie zu entwickeln. Damit können die verbrennungsbasierten Geräte ersetzt werden. Batteriebetriebene Geräte sind einfacher in der Handhabung, günstiger und haben eine deutlich bessere CO₂ Bilanz als verbrennungsbasierte Geräte.

Ein gattungsgemäßer Energiespeicher zur Speicherung von mechanischer Energie in einem Arbeitsgerät ist bekannt aus der DE102019109554 A1. Diese beschreibt ein Biegefederelement aus Faserkunststoffverbundmaterial, das für eine optimierte Biegeleistung und strukturelle Integrität entwickelt wurde. Es umfasst Deckschichten aus einem Faserkunststoffverbundmaterial mit parallel ausgerichteten Fasern und ein Abstandserweiterungselement zwischen diesen Schichten aus einem zweiten, unterschiedlichen Faserkunststoffverbundmaterial. Dieses Design verbessert die Flexibilität und Dämpfungseigenschaften des Federelements und erlaubt Krümmungen ohne signifikante strukturelle Belastungen.

Die Lehre der DE102014110558 A1 befasst sich mit einem flexiblen Element aus faserverstärktem Kunststoff, das als Biegefederelement dienen soll. Dieses Bauteil ist so strukturiert, dass seine Flexibilität und Elastizität, durch eine bestimmte Anordnung und Ausrichtung der Fasermaterialien verbessert, wird. Die DE102014110558 A1 beschreibt detailliert, wie die Fasern in den Verbundwerkstoff eingebettet werden, um die gewünschten mechanischen Eigenschaften und die Haltbarkeit zu erreichen. Dies macht es in Branchen wie der Automobilindustrie, der Luft- und Raumfahrt oder der Unterhaltungselektronik nützlich, wo leichte und hochfeste Materialien entscheidend sind.

Ein gattungsgemäßes Arbeitsgerät ist aus der US 2007/0007319 A1 bekannt. Die US 2007/0007319 A1 beschreibt ein Arbeitsgerät zum Eintreiben von Befestigungselementen, das effizient und leicht ist und ausreichend Energie bereitstellt, um ein Befestigungselement einzutreiben. Das Arbeitsgerät verfügt über eine Gehäusebaugruppe und eine mit dieser verbundene Nasenbaugruppe sowie über ein Magazin, das die Befestigungselemente bereitstellt. Ein Motor bewegt das Energieübertragungselement durch einen Rückholführungshub, und eine Feder aus Verbundmaterial treibt das Energieübertragungselement durch einen Schlaghub an. Das Arbeitsgerät umfasst genau einen als Feder ausgestalteten Energiespeicher. Die Feder besteht aus einem Verbundwerkstoff und ist dabei als Schraubenfeder bzw. Torsionsfeder ausgestaltet. Die US 2007/0007319 A1 beschreibt auch eine detaillierte Anordnung des Antriebssystems, das eine Batterie als elektrische Energiequelle verwendet.

Die Schrift DE102006000139 B3 beschreibt ein handgeführtes Eintreibgerät, das für schnelleres und effizienteres Eintreiben von Befestigungselementen geeignet ist. Es umfasst ein Antriebsfederelement aus faserverstärktem Kunststoff, das leichter ist und höhere Eintreibgeschwindigkeiten und -energien ermöglicht als herkömmliche Metallfedern. Die Feder besteht aus mehreren Segmenten, die aus Materialien wie Glasfaser, Kohlefasern oder Aramid gefertigt sind.

DE102008054816 A1 beschreibt ein handgeführtes Eintreibgerät, das insbesondere für die Verwendung von Compositefedern optimiert ist. Die Erfindung zielt darauf ab, Probleme bei der Kraftübertragung auf die Feder zu lösen, die bei traditionellen Konstruktionen aufgrund der sich ändernden Steigung der Federwindungen während der Kompression auftreten können. Ein spezielles Krafteinleitungselement wird an den Enden des Antriebsfederelements angebracht, das eine zentrische und gleichmäßige Krafteinleitung ermöglicht, selbst wenn sich die Form der Feder durch Belastung ändert.

DE102007000226 A1 wird als nächstkommender Stand der Technik angesehen und beschreibt ein handgeführtes Eintreibgerät mit einem versetzbar geführten Energieübertragungselement. Als Antriebsquelle für das Energieübertragungselement dient dabei eine mechanische Antriebsfeder, die über einen Spannmechanismus spannbar ist. Von Vorteil ist dabei, dass die mechanische Antriebsfeder kostengünstig ist, wodurch ein derartiges Eintreibgerät preiswert herzustellen ist. Ferner haben mechanische Federn gegenüber Gasfedern den Vorteil, dass es beim Spannen der mechanischen Feder nicht wie bei Gasfedern zu Temperaturerhöhungen kommt, sowie dass eine gespannte Feder die gespeicherte Energie über lange Zeit nicht verliert, während bei einer Gasfeder die Energie durch Leckage allmählich verloren geht. Dieses Eintreibgerät hat den Nachteil, dass nur relativ geringe Setzenergien realisiert werden können und dass sie einen erheblichen Anteil am Rückstoß des Eintreibgerätes bei einem Setzvorgang verursachen.

Eine Aufgabe der vorliegenden Erfindung liegt darin, die Nachteile des nächstkommenden Standes der Technik zu überwinden und die potenzielle Energie des Energiespeichers zu erhöhen und zugleich das Gewicht des Energiespeichers und/oder des Arbeitsgerätes zu reduzieren.

### Beschreibung

Ein erster Aspekt der Erfindung umfasst ein Arbeitsgerät, zum Eintreiben eines Befestigungselements in einen Untergrund, umfassend ein Energieübertragungssystem, wobei das Energieübertragungssystem einen Energiespeicher zur Speicherung von mechanischer Energie in dem Arbeitsgerät umfasst, wobei der Energiespeicher mindestens eine Biegefeder und ein Verbundmaterial umfasst. Mindestens eine technische Wirkung des Aspekts ist, dass eine Biegefeder, welche vorzugsweise ein Verbundmaterial umfasst, kompakt bzw. räumlich optimiert, gebaut werden kann und somit die Zugänglichkeit zu mehr - insbesondere zu schwierigen - Befestigungspunkten ermöglicht. Somit umfasst das Arbeitsgerät einen erweiterten Anwendungsbereich verglichen zu gattungsgemäßen Geräten aus dem Stand der Technik. Eine zusätzliche technische Wirkung besteht darin, dass durch die Integration der Biegefeder in das Energieübertragungssystem deutlich höhere Eintreibenergien erreicht werden als bei herkömmlichen Arbeitsgeräten der beanspruchten Gattung. Auch die zusätzliche technische Wirkung erweitert den Anwendungsbereich des Arbeitsgeräts. Der Begriff "Biegefeder" umfasst unter anderem Federn die Druck- und/oder Zugbelastungen ausgesetzt werden können. Im Rahmen der Erfindung werden unter anderem C-Federn, Schraubenfedern, Druckmäanderfedern als auch Zugmäanderfedern als "Biegefedern" angesehen. Hierbei umfasst das Arbeitsgerät mindestens eine Biegefeder, es können aber auch zwischen zwei und sechs Biegefedern, insbesondere vier Biegefedern, umfasst werden. Der Begriff "Verbundmaterial" umfasst unter anderem Fasern und ein Matrix Material. Dabei können die Fasern und das Matrix Material separat vorliegen und erst im Herstellungsprozess des Energiespeichers vermischt werden. Der technische Effekt der Fasern liegt darin, dass diese Zug- und Druckspannungen aufnehmen. Der technische Effekt der Matrix liegt darin, dass diese Schubspannungen aufnimmt. Es ist aber auch möglich, dass Fasern und das Matrix Material vor dem Herstellungsprozess bereits vermischt werden. In diesem Fall spricht man von einem "Pre-preg" Material. Vorzugsweise werden unidirektional ausgerichtete Fasern im Pre-preg Materialien verwendet. Vorteilhafterweise sind die Fasern in Richtung der maximalen Druck- und Zugspannung orientiert. Der technische Effekt der unidirektional ausgerichteten Fasern ist, dass die Zug- und Druckspannungsfestigkeit der Biegefeder erhöht wird. Der Faseranteil liegt zwischen 35 % und 75 %, insbesondere zwischen 45 % und 65 %.

In einer weiteren Ausführungsform umfasst die Erfindung ein Arbeitsgerät das einen Energiespeicher mit einer Energiedichte von mindestens 500 J/kg, aufweist. Der Begriff "Energiedichte" umfasst unter anderem die Energiemenge, die pro Kilogramm Eigengewicht des Energiespeichers im Energiespeicher zwischengespeichert werden kann und/oder vom Energiespeicher an das Befestigungselement übertragen werden kann. Alternativ umfasst die Erfindung ein Arbeitsgerät, wobei der Energiespeicher eine Energiedichte von mindestens 600 J/kg, bevorzugt von mindestens 650 J/kg, weiterhin bevorzugt von mindestens 750 J/kg, besonders bevorzugt von mindestens 950 aufweist. Mindestens eine technische Wirkung dieser weiteren Ausführungsform und dieser Alternativen ist es, dass die Eintreibenergie bei gleichzeitiger Reduktion des Gewichts erhöht werden kann.

In einer weiteren Ausführungsform umfasst die Erfindung ein Energieübertragungssystem, das mindestens einen Rollenhalter zum Lagern der Biegefeder im Arbeitsgerät umfasst, wobei die Biegefeder eine Lagerkontaktfläche zum Kontaktieren der Biegefeder mit dem Rollenhalter umfasst. Der Begriff "Lagerkontaktfläche" umfasst unter anderem einen Flächenabschnitt auf der Biegefeder, welcher dazu ausgelegt ist, mit einem Teil des Rollenhalters in Kontakt zu stehen, d.h. diesen zu berühren. Die Lagerkontaktfläche kann sich auf einer und/oder unterschiedlichen Abschnitten der Biegefeder befinden. Alternativ umfasst die Erfindung ein Arbeitsgerät, wobei die Lagerkontaktfläche der Biegefeder eben, konkav oder konvex ausgebildet ist. Mindestens eine technische Wirkung dieser weiteren Ausführungsform und der Alternative ist es, dass die Biegefeder und somit der Energiespeicher im Arbeitsgerät eingebaut werden können, ohne dass die Biegefeder und somit auch nicht der Energiespeicher ein dediziertes Element für die Lagerung im Arbeitsgerät benötigen. Dies führt zu einem kleineren und leichteren Arbeitsgerät. Eine weitere technische Wirkung, besteht darin, dass die relative Position des Rollenhalters innerhalb des Gehäuses des Arbeitsgerätes verändert werden kann. Diese relative Position ändert sich immer dann, wenn mechanische Energie in den Energiespeicher eingeführt oder herausgenommen wird.

In einer weiteren Ausführungsform umfasst die Erfindung ein Arbeitsgerät, wobei der Rollenhalter ein Lagerelement umfasst, sodass eine relative Bewegung zwischen der Lagerkontaktfläche der Biegefeder und der Mantelfläche des Lagerelements in einer Umfangsrichtung des Lagerelements möglich ist. Der Begriff "Lagerelement" umfasst unter anderem einen zylindrischen Körper an dessen Mantelfläche, also in einer Umfangsrichtung des Lagerelements, die Biegefeder und das Lagerelement sich relativ zueinander bewegen können. Darüber hinaus kann das "Lagerelement" außerhalb der Kontaktfläche mit der Biegefeder auch einen nicht idealen zylindrischen Körper umfassen, welcher aus Herstellungsgründen von der zylindrischen Form abweichen kann. Alternativ umfasst die Erfindung ein Arbeitsgerät, wobei die Mantelfläche des Lagerelements eben, konkav oder konvex ausgebildet ist. Mindestens eine technische Wirkung dieser weiteren Ausführungsform und der Alternative ist es, dass der Rollenhalter zum Lagern der Biegefeder und somit des Energiespeichers im Arbeitsgerät einfach realisiert werden kann. Dies führt zu einem kleineren und leichteren Arbeitsgerät.

In einer weiteren Ausführungsform umfasst die Erfindung ein Arbeitsgerät, wobei das Energieübertragungssystem mindestens einen Stützhalter zum Stützen der Biegefeder im Arbeitsgerät umfasst, wobei die Biegefeder eine Stützkontaktfläche zum Kontaktieren der Biegefeder mit dem Stützhalter umfasst. Der Begriff "Stützhalter" umfasst unter anderem ein Element an welchem die Biegefeder gestützt oder fest eingespannt werden kann, sodass Kräfte von der Biegefeder auf das Gehäuse des Arbeitsgerätes übertragen werden können. Der Begriff "Stützkontaktfläche" umfasst unter anderem einen Flächenabschnitt auf der Biegefeder, welcher dazu ausgelegt ist, mit einem Teil des Stützhalters in Kontakt zu stehen, d.h. dieses zu berühren. Die Stützkontaktfläche kann sich auf einer und/oder unterschiedlichen Flächen der Biegefeder befinden. Außerdem kann die Biegefeder an der Stützkontaktfläche am Arbeitsgerät gestützt oder fixiert werden. Alternativ umfasst die Erfindung ein Arbeitsgerät, wobei die Stützkontaktfläche der Biegefeder eben, konkav oder konvex ausgebildet ist. Mindestens eine technische Wirkung dieser weiteren Ausführungsform und der Alternative ist es, dass die Biegefeder und somit der Energiespeicher im Arbeitsgerät eingebaut werden können, ohne dass die Biegefeder und somit auch nicht der Energiespeicher ein dediziertes Element für die Stützung oder die Fixierung im Arbeitsgerät benötigen. Dies führt zu einem kleineren und leichteren Arbeitsgerät.

In einer weiteren Ausführungsform umfasst die Erfindung ein Arbeitsgerät, wobei der Stützhalter ein Stützelement umfasst, sodass eine relative Bewegung zwischen der Stützkontaktfläche der Biegefeder und einer Mantelfläche des Stützelements in einer Umfangsrichtung des Stützelements möglich ist. Der Begriff "Stützelement" umfasst unter anderem einen zylindrischen Körper an dessen Mantelfläche, also in einer Umfangsrichtung des Stützelements, die Biegefeder und das Stützelement sich relativ zueinander bewegen können. Darüber hinaus kann das "Stützelement" außerhalb der Kontaktfläche mit der Biegefeder auch einen nicht idealen zylindrischen Körper umfassen, welcher aus Herstellungsgründen von der zylindrischen Form abweichen kann. Alternativ umfasst die Erfindung ein Arbeitsgerät, wobei die Mantelfläche des Stützelements eben, konkav oder konvex ausgebildet ist. Mindestens eine technische Wirkung dieser weiteren Ausführungsform und der Alternative ist es, dass der Stützhalter zum Stützen oder Fixieren der Biegefeder und somit des Energiespeichers im Arbeitsgerät einfach realisiert werden kann. Dies führt zu einem kleineren und leichteren Arbeitsgerät.

In einer weiteren Ausführungsform umfasst die Erfindung ein Arbeitsgerät, wobei der Stützhalter fest mit einem Gehäuse des Arbeitsgerätes verbunden ist, sodass der Stützhalter im Gehäuse des Arbeitsgerätes fest positioniert ist. Der Begriff "fest positioniert" umfasst unter anderem die relative Position des Stützhalters innerhalb des Gehäuses des Arbeitsgerätes. Diese relative Position ist fest und ändert sich auch nicht, wenn mechanische Energie in den Energiespeicher eingeführt oder herausgenommen wird. Mindestens eine technische Wirkung dieser weiteren Ausführungsform ist, dass der Stützhalter geeignet ist, mehr als eine Biegefeder zu stützen oder zu fixieren. Insbesondere ist der Stützhalter geeignet zwei Biegefedern zu stützen oder zu fixieren. Dies führt zu einem kleineren und leichteren Arbeitsgerät.

In einer weiteren Ausführungsform umfasst die Erfindung ein Arbeitsgerät, wobei die Biegefeder eine erste Außenseite mit einem ersten Krümmungsradius und eine zweite Außenseite mit einem zweiten Krümmungsradius aufweist, wobei die Biegefeder einen Krümmungsabschnitt umfasst, in welchem der erste Krümmungsradius und der zweite Krümmungsradius verschieden sind. Der Begriff "Krümmungsabschnitt" umfasst unter anderem einen Teilbereich der Biegefeder in welchem die erste Außenseite mindestens einen ersten Krümmungsradius aufweist und die zweite Außenseite mindestens einen zweiten Krümmungsradius aufweist. In einem Krümmungsabschnittes kann die erste Außenseite zwei oder mehr erste Krümmungsradien umfassen und die zweite Außenseite kann zwei oder mehr zweite Krümmungsradien umfassen. Die ersten Krümmungsradien der ersten Außenseite können gleich oder verschieden zueinander sein. Die zweiten Krümmungsradien der zweiten Außenseite können gleich oder verschieden zueinander sein. Der Beginn eines Krümmungsabschnitts liegt vor, sobald der Krümmungsradius größer 0 mm und kleiner 100 mm ist. Das Ende eines Krümmungsabschnittes liegt vor, sobald der Krümmungsradius nahe 0 mm oder größer 100 mm ist. Die Biegefeder kann einen oder mehrere Krümmungsabschnitte umfassen. Die Differenz des ersten Krümmungsradius und des zweiten Krümmungsradius entspricht der Federdicke D. Die Federdicke D liegt im Bereich zwischen 3 mm und 9 mm, vorzugsweise zwischen 5 mm und 7 mm, besonders bevorzugt sind 6 mm. Mindestens eine technische Wirkung dieser weiteren Ausführungsform ist es, dass die Größe der Biegefeder reduziert wird. Dies führt zu einem kleineren und leichteren Arbeitsgerät.

In einer weiteren Ausführungsform umfasst die Erfindung ein Arbeitsgerät, wobei der Krümmungsabschnitt die Lagerkontaktfläche der Biegefeder und/oder die Stützkontaktfläche der Biegefeder umfasst. Mindestens eine technische Wirkung dieser weiteren Ausführungsform ist es, dass die Biegefeder und somit der Energiespeicher im Arbeitsgerät eingebaut werden können, ohne dass die Biegefeder und somit auch nicht der Energiespeicher ein dediziertes Element für die Lagerung oder die Stützung im Arbeitsgerät benötigen. Eine weitere technische Wirkung besteht darin, dass der Krümmungsabschnitt zwei Aufgaben gleichzeitig löst. Für die erste Alternative (Lagerkontaktfläche) stellt der Krümmungsabschnitt eine Kontaktfläche zum Rollenhalter zur Verfügung und erhöht die Zug- und Druckfestigkeit der Biegefeder. Für die zweite Alternative (Stützkontaktfläche) stellt der Krümmungsabschnitt eine Kontaktfläche zum Stützhalter zur Verfügung und erhöht die Zug- und Druckfestigkeit der Biegefeder. Die genannten technischen Wirkungen führen zu einem kleineren und leichteren Arbeitsgerät.

In einer weiteren Ausführungsform umfasst die Erfindung ein Arbeitsgerät, dass das Energieübertragungssystem ein Energieübertragungsband und der Energiespeicher mindestens zwei Biegefedern umfasst. Der Ausdruck "mindestens zwei Biegefedern" umfasst unter anderem zwei Biegefedern, umfasst aber auch mehr als zwei Biegefedern, beispielsweise, drei, vier, fünf, sechs, sieben, acht, neun oder zehn Biegefedern. Bevorzugt wird eine gerade Anzahl an Biegefedern. Mindestens eine technische Wirkung dieser weiteren Ausführungsform ist es, dass die in dem Energiespeicher gespeicherte potenzielle Energie innerhalb des Arbeitsgerätes gleichmäßig verteilt werden kann. Zudem werden durch mindestens zwei Biegefedern die Belastungen durch Zug- und Druckspannungen auf das Arbeitsgerät - speziell des Gehäuses des Arbeitsgerätes - reduziert. Somit kann sowohl die Langlebigkeit des Arbeitsgerätes als auch die geforderte Energiedichte des Gerätes gewährleistet werden. Der Begriff "Energieübertragungsband" umfasst unter anderem ein seil- oder bandförmiges Transmissionsmittel wie in der DE102007000226 A1 gezeigt. Mindestens eine technische Wirkung dieser weiteren Ausführungsform ist es, die elektrische Energie aus dem Akku in Form von mechanischer Energie auf das Befestigungselement zu übertragen.

In einer weiteren Ausführungsform umfasst die Erfindung ein Arbeitsgerät, wobei resultierende Kräfte der mindestens zwei Biegefedern an dem Rollenhalter und/oder an dem Stützhalter eine Wirkungsebene W aufspannen, wobei die Längsachse eines Energieübertragungselementes sich zumindest teilweise in dieser Wirkungsebene W befindet. Bevorzugt wird eine gerade Anzahl an Biegefedern. Mindestens eine technische Wirkung dieser weiteren Ausführungsform ist es, dass die gerade Anzahl von Biegefedern mit direkter Kraftlinie auf die gerade Anzahl von Rollenhalter und/oder Stützhalter wirkt. Eine gespannte Biegefeder bewirkt eine Kraft, die den Rollenhalter in Bewegungsrichtung verschiebt. Damit können Querkräfte und Lagerreibung vermieden werden. Was zu einem höheren Wirkungsgrad und einem leichteren Gerät führt. Eine gerade Anzahl von Federn und Rollenhaltern ermöglicht zudem, dass diese sich in entgegengesetzter Richtung bewegen können. Damit heben sich ihre Trägheitskräfte innerhalb des Gerätes auf. Dies reduziert den Rückstoß den der Anwender beim Eintreiben des Nagels spürt.

Ein zweiter Aspekt der Erfindung umfasst einen Energiespeicher zur Speicherung von mechanischer Energie in einem Arbeitsgerät, wobei der Energiespeicher ein Verbundstoffmaterial mit unidirektionalen Fasern und eine Biegefeder mit einer Lagerkontaktfläche und/oder Stützkontaktfläche umfasst. Mindestens eine technische Wirkung dieses zweiten Aspektes ist es, dass die Biegefeder und somit der Energiespeicher in einem Arbeitsgerät eingebaut werden können, ohne dass die Biegefeder und somit auch nicht der Energiespeicher ein dediziertes Element für die Lagerung im Arbeitsgerät benötigen.

In einer weiteren Ausführungsform umfasst die Erfindung einen Energiespeicher, wobei die unidirektionalen Fasern im Bereich der Lagerkontaktfläche und/oder der Stützkontaktfläche entlang eines Kreissegmentes ausgerichtet sind. Mindestens eine technische Wirkung dieser weiteren Ausführungsform ist es, durch die Anordnung der Fasern die Lagerkontaktflächen und die Stützkontaktflächen der Biegefeder als zur Lagerung des Biegefeder in einem Arbeitsgerät verwendet werden können. Dadurch kann die Biegefeder und somit auch der Energiespeicher im Arbeitsgerät eingebaut werden ohne ein dediziertes Element für die Stützung, Fixierung oder Lagerung im Arbeitsgerät zu benötigen. Dies führt zu einem kleineren und leichteren Arbeitsgerät.

In einer weiteren Ausführungsform umfasst die Erfindung einen Energiespeicher, wobei die unidirektionalen Fasern in Richtung einer Zug- und Druckspannung der Biegefeder liegen, wobei die Biegefeder mindestens eine Gewebelage und/oder eine Gelegelage aufweist, deren Faserrichtung 45° gegenüber den unidirektionalen Fasern orientiert sind. Mindestens eine technische Wirkung dieser weiteren Ausführungsform ist es, die unidirektional ausgerichteten Fasern in Querrichtung zusätzlich zum Matrixmaterial zu verbinden. Eine weitere technische Wirkung besteht darin, dass durch die Verwendung von Gewebe und/oder Gelegelagen der Einschluss von Luftblasen reduziert werden kann. Dies führt zu niedrigeren Spannungsspitzen im Energiespeicher und somit auch zu einer längeren Lebensdauer.

In einer weiteren Ausführungsform umfasst die Erfindung einen Energiespeicher, wobei dass die Gewebelage und /oder die Gewebelage an einer Außenseite der Biegefeder angeordnet ist. Mindestens eine technische Wirkung dieser weiteren Ausführungsform ist es, den Einschluss von Luftblasen zu vermeiden. Dies führt zu weniger Spannungsspitzen im Energiespeicher und somit auch zu einer längeren Lebensdauer.

Es folgen weitere optionale Ausführungsformen welche beliebig mit allen bisherigen Ausführungsformen des ersten und zweiten Aspektes und auch mit allen weiteren optionalen Ausführungsformen des ersten und zweiten Aspektes kombiniert oder spezifiziert werden können.

In einer weiteren optionalen Ausführungsform umfasst die Erfindung ein Arbeitsgerät, wobei das Energieübertragungssystem einen Energiespeicher, einen Rollenhalter, ein Energieübertragungsband, eine Spindel und ein Energieübertragungselement umfasst. Hierbei umfasst das Energieübertragungssystem mindestens einen Rollenhalter, es können aber auch zwei, drei oder vier Rollenhalter sein. Hierbei umfasst der Rollenhalter mindestens ein Rollenelement zur Führung des Energieübertragungsbandes, es können aber auch zwei, drei oder vier Rollenelemente sein. Dabei stellen die Rollenelemente Grundelemente des auf einem Flaschenzug beruhenden Übersetzungsgetriebes dar. Vorzugsweise umfasst das Arbeitsgerät zwei Rollenhalter mit jeweils zwei Rollenelementen. Dies führt zu einer Übersetzung von 1:4. Das Energieübertragungselement bewegt sich somit viermal schneller, als der Energiespeicher, wenn sich die Biegefedern entspannen. Eine hohe Eintreibgeschwindigkeit ist notwendig zum Eintreiben von Befestigungselementen wie Nägeln in Stahl oder in Betonuntergründen. Somit ist der Hub des Energieübertragungselementes viermal höher als der Hub des Energiespeichers.

In einer weiteren optionalen Ausführungsform umfasst die Erfindung ein Arbeitsgerät, wobei der Energiespeicher eine Torsionsfeder umfasst. Hierbei umfasst das Arbeitsgerät mindestens eine Torsionsfeder, es können aber auch zwischen 2 und 6 Torsionsfedern, insbesondere 4 Torsionsfedern, umfasst werden. Der Begriff "Torsionsfeder" umfasst unter anderem Federn die Torsionsbelastungen ausgesetzt werden können. Im Rahmen der Erfindung werden unter anderem Schraubenfedern und Torsionsstäbe als "Torsionsfeder" angesehen. Mindestens eine technische Wirkung dieser Alternativen ist, dass eine Torsionsfeder sehr leicht gebaut werden kann und somit das Gewicht das Arbeitsgerätes reduziert wird.

In einer weiteren optionalen Ausführungsform umfasst die Erfindung ein Arbeitsgerät, wobei der Energiespeicher zwei Torsionsfedern umfasst, welche ineinander angeordnet werden. Hierbei sind beide Torsionsfedern durch ein gemeinsames Ende torsionsfest verbunden. Der innere Torsionsstab wäre beispielsweise an einem Ende verdreh fest gelagert. Das Moment wird durch den inneren Torsionsstab über die verdreh feste Fixierung zum äußeren Torsionsstab in den äußeren Torsionsstab geleitet, der das Moment wiederum weiterleitet. Mindestens eine technische Wirkung dieser Alternativen ist, dass die Steifigkeit des Stabes durch die Verlängerung der Torsionsfeder erhöht wird. Dadurch wird die Lebensdauer des Arbeitsgerätes verlängert und die Bauweise des Arbeitsgerätes wird kompakter.

In einer weiteren optionalen Ausführungsform umfasst die Erfindung ein Arbeitsgerät, wobei die verwendeten Fasern, Glasfasern, Kohlefasern oder Aramidfasern umfassen können. Vorzugsweise werden Glasfasern verwendet. Mindestens eine technische Wirkung dieser Alternativen ist es, dass die Bruchdehnung deutlich grösser als beispielsweise bei Kohlefasern ist. Zudem sind "Pre-preg"-Lagen aus Glasfaser deutlich kostengünstiger. Damit kann die Feder kleiner gebaut werden und das Herstellungsverfahren wird vereinfacht. Kohlenfaserbasiertes "Pre-preg" Material hat mindestens den technischen Vorteil einer höheren Zug- und Druckspannungsfestigkeit und einer geringeren Dichte gegenüber Glasfaser basiertem "Pre-preg" Material.

In einer weiteren optionalen Ausführungsform umfasst die Erfindung ein Arbeitsgerät, wobei das verwendete Verbundmaterial Fasern und einem Duroplast, z.B. Epoxidharz umfasst oder durch Fasern und Thermoplast aufgebaut werden kann.

In einer weiteren optionalen Ausführungsform umfasst die Erfindung ein Arbeitsgerät, wobei der erste Krümmungsradius und/oder der zweite Krümmungsradius mindestens in einem Wertebereich aus der folgenden Liste liegt:
i. 5 mm bis 80 mm;
ii. 10.5 mm bis 77 mm;
iii. 11.5 mm bis 76 mm;
iv. 12.0 mm bis 75.5 mm;
v. 13 mm bis 74.5 mm.

Mindestens eine technische Wirkung dieser Ausführungsform besteht darin, dass der erste Krümmungsradius und/oder der zweite Krümmungsradius Werte umfassen, bzw. in einem Wertebereich für Krümmungsradien liegen, wodurch die Biegefeder eine für ein Arbeitsgerät, zum Eintreiben eines Befestigungselements in einen Untergrund, benötigte Zug- und Druckspannungsfestigkeit als auch Schubspannungsfestigkeit aufweist. Eine weitere technische Wirkung dieser Ausführungsform besteht darin, dass sowohl für die Zug- und Druckspannungsfestigkeit als auch für die Schubspannungsfestigkeit individualisierte, - der ausgelegten Belastung entsprechende - Werte realisiert werden können.

In einer weiteren optionalen Ausführungsform umfasst die Erfindung ein Arbeitsgerät, wobei die Biegefeder einen Längsabschnitt umfasst, in welchem der erste Krümmungsradius und der zweite Krümmungsradius einen Wert größer als 100 mm aufweisen oder der erste Krümmungsradius und der zweite Krümmungsradius den Wert 0 mm aufweisen.

Der Begriff "Längsabschnitt" umfasst mindestens einen Teilbereich der Biegefeder in welchem die erste Außenseite einen ersten Krümmungsradius aufweist, der den Wert 0 mm hat oder sich diesem stark annähert und die zweite Außenseite einen zweiten Krümmungsradius aufweist, der den Wert 0 mm hat oder sich diesem stark annähert. Außerdem umfasst der Begriff "Längsabschnitt" ebenfalls mindestens einen Teilbereich der Biegefeder in welchem die erste Außenseite einen derart großen ersten Krümmungsradius aufweist und die zweite Außenseite einen derart großen zweiten Krümmungsradius aufweist, dass der Teilbereich der Biegefeder nahezu eben ist und somit so gut wie nicht gekrümmt ist. Dies wird durch einen Wert größer 100 mm erreicht. In einem Längsabschnitt umfasst die erste Außenseite einen ersten Krümmungsradius und die zweite Außenseite umfasst einen zweiten Krümmungsradius. Der Beginn eines Längsabschnitts liegt vor, wenn der Krümmungsradius nahe 0 mm oder größer 100 mm ist. Das Ende des Längsabschnittes liegt vor, sobald der Krümmungsradius größer 0 mm und kleiner 100 mm ist. Die Biegefeder kann einen oder mehrere Längsabschnitte umfassen. Mindestens eine technische Wirkung dieser weiteren Ausführungsform ist es, dass die Größe der Biegefeder reduziert wird. Dies führt zu einem kleineren und leichteren Arbeitsgerät.

In einer weiteren optionalen Ausführungsform umfasst die Erfindung ein Arbeitsgerät, wobei die Biegefeder mindestens eine Abschnittskombination aus der folgenden Liste aufweist:
i. Mindestens drei Krümmungsabschnitte und mindestens zwei Längsabschnitte;
ii. Mindestens vier Krümmungsabschnitte und mindestens drei Längsabschnitte;
iii. Mindestens fünf Krümmungsabschnitte und mindestens vier Längsabschnitte;
iv. Mindestens sechs Krümmungsabschnitte und mindestens fünf Längsabschnitte;
v. Mindestens sieben Krümmungsabschnitte und mindestens sechs Längsabschnitte.

Der Begriff "Abschnittskombination" umfasst mindestens zwei unterschiedliche Teilbereiche der Biegefeder - also mindestens einen Krümmungsabschnitt und mindestens einen Längsabschnitt. Der Begriff "Abschnittskombination" umfasst sowohl eine abwechselnde Reihenfolge mindestens eines Krümmungsabschnittes und mindestens eines Längsabschnittes als auch eine wiederholende Reihenfolge eines Krümmungsabschnittes oder eines Längsabschnittes. Eine Kombination einer abwechselnden und wiederholenden Reihenfolge wird ebenfalls durch den Begriff "Abschnittskombination" umfasst.

Alternative i) dieser Ausführungsform umfasst unter anderem drei Krümmungsabschnitte und zwei Längsabschnitte. Zwei der drei Krümmungsabschnitte können dabei eine Lagerkontaktfläche der Biegefeder und/oder die Stützkontaktfläche der Biegefeder umfassen. In solchem einen Fall entspricht die Biegefeder der Alternativen i) einer Einfach-C-Form mit zwei Krümmungsabschnitten zum Lagern und/oder Stützen der Biegefeder.

Alternative ii) dieser Ausführungsform umfasst unter anderem vier Krümmungsabschnitte und drei Längsabschnitte. Zwei der vier Krümmungsabschnitte können dabei eine Lagerkontaktfläche der Biegefeder und/oder die Stützkontaktfläche der Biegefeder umfassen. In solchem einen Fall entspricht die Biegefeder der Alternativen ii) einer S-Form oder einer Doppel-C-Form mit zwei Krümmungsabschnitten zum Lagern und/oder Stützen der Biegefeder.

Alternative iii) dieser Ausführungsform umfasst unter anderem fünf Krümmungsabschnitte und vier Längsabschnitte. Zwei der fünf Krümmungsabschnitte können dabei eine Lagerkontaktfläche der Biegefeder und/oder die Stützkontaktfläche der Biegefeder umfassen. In solchem einen Fall entspricht die Biegefeder der Alternativen iii) einer M-Form oder einer Dreifach-C-Form mit zwei Krümmungsabschnitten zum Lagern und/oder Stützen der Biegefeder.

Alternative iv) dieser Ausführungsform umfasst unter anderem sechs Krümmungsabschnitte und fünf Längsabschnitte. Zwei der sechs Krümmungsabschnitte können dabei eine Lagerkontaktfläche der Biegefeder und/oder die Stützkontaktfläche der Biegefeder umfassen. In solchem einen Fall entspricht die Biegefeder der Alternativen iv) einer Doppel-S-Form oder einer Vierfach-C-Form mit zwei Krümmungsabschnitten zum Lagern und/oder Stützen der Biegefeder.

Alternative v) dieser Ausführungsform umfasst unter anderem sieben Krümmungsabschnitte und sechs Längsabschnitte. Zwei der sieben Krümmungsabschnitte können dabei eine Lagerkontaktfläche der Biegefeder und/oder die Stützkontaktfläche der Biegefeder umfassen. In solchem einen Fall entspricht die Biegefeder der Alternativen v) einer Fünffach-C-Form mit zwei Krümmungsabschnitten zum Lagern und/oder Stützen der Biegefeder.

Die Aufzählung der Alternativen zu dieser Ausführungsform ist nicht abschließend. Es ist jede n-fache-C-Form realisierbar und durch diese Ausführungsform umfasst. Grundsätzlich gilt: Eine n-fache-C-Form führt zu mindestens n+2 Krümmungsabschnitten und zu mindestens n+1 Längsabschnitten. Beispielsweise umfasst eine 8-fache C-Form daher mindestens 10 Krümmungsabschnitte und mindestens 9 Längsabschnitte.

Mindestens eine technische Wirkung dieser weiteren Ausführungsform ist es, dass die Alternativen i) bis v) eine spezifische Zug- und Druckfestigkeit aufweisen, um die benötigte Lebensdauer des Arbeitsgeräts bzw. des Energiespeichers und der Biegefeder zu gewährleisten. Eine weitere technische Wirkung besteht darin, dass durch unterschiedliche Formen (C-Form bis n-fache-C-Form) stets die Knicksteifigkeit bei unterschiedlich großen und langen Biegefeder gewährleistet ist. Dies führt dazu, dass unterschiedliche Energiedichten des Energiespeichers erreicht werden können und auch unterschiedlich große Arbeitsgeräte - entsprechend dem Anforderungsprofil des Geräteeinsatzes - realisiert werden können.

In einer weiteren optionalen Ausführungsform umfasst die Erfindung ein Arbeitsgerät, wobei der Krümmungsabschnitt mindestens einen Krümmungsgradienten aus der folgenden Liste umfasst:
i. Der Krümmungsgradient ist konstant;
ii. Der Krümmungsgradient nimmt zu;
iii. Der Krümmungsgradient nimmt ab.

Alternative i) dieser Ausführungsform umfasst unter anderem einen Krümmungsabschnitt, in welchem sich der Krümmungsgradient nicht ändert. Somit weisen sowohl die erste Außenseite als auch die zweite Außenseite stets einen konstanten ersten Krümmungsradius und einen konstanten zweiten Krümmungsradius auf. In anderen Worten: In Alternative i) dieser Ausführungsform ändert sich weder für die erste Außenseite noch für die zweite Außenseite der Krümmungsradius innerhalb des Krümmungsabschnittes.

Alternative ii) dieser Ausführungsform umfasst unter anderem einen Krümmungsabschnitt, in welchem der Krümmungsgradient zunimmt. Somit weist die erste Außenseite einen ersten Krümmungsradius auf, welcher zunimmt und auch die zweite Außenseite weist einen zweiten Krümmungsradius auf, welcher zunimmt. In anderen Worten: In Alternative ii) dieser Ausführungsform steigt der Krümmungsradius innerhalb des Krümmungsabschnittes mindestens einmal an. Der Krümmungsradius - sowohl der ersten Außenseite als auch der zweiten Außenseite - kann innerhalb des Krümmungsabschnittes aber auch noch weiter ansteigen.

Alternative iii) dieser Ausführungsform umfasst unter anderem einen Krümmungsabschnitt, in welchem der Krümmungsgradient abnimmt. Somit weist die erste Außenseite einen ersten Krümmungsradius auf, welcher abnimmt und auch die zweite Außenseite weist einen zweiten Krümmungsradius auf, welcher abnimmt. In anderen Worten: In Alternative iii) dieser Ausführungsform nimmt der Krümmungsradius innerhalb des Krümmungsabschnittes mindestens einmal ab. Der Krümmungsradius - sowohl der ersten Außenseite als auch der zweiten Außenseite - kann innerhalb des Krümmungsabschnittes aber auch noch weiter abnehmen.

Die Alternativen dieser Ausführungsformen können beliebig kombiniert werden. Beispielsweise kann der Krümmungsgradient innerhalb eines Krümmungsabschnittes zunehmen (Alternative II) dann konstant bleiben (Alternative I) und abschließend wieder abzunehmen (Alternative III). Dieses Beispiel zeigt also die Kombination II-I-III der Alternativen dieser Ausführungsform. Mindestens eine technische Wirkung dieser optionalen Ausführungsform ist, dass durch den Krümmungsgradienten die Herstellbarkeit der Biegefeder leichter umzusetzen ist. Eine weitere technische Wirkung ist, dass eine Lastspezifische Biegefederform realisiert werden kann. Dadurch wird die Lebensdauer des Arbeitsgerätes verlängert und die Bauweise des Arbeitsgerätes wird kompakter.

Mindestens eine technische Wirkung dieser optionalen Ausführungsform ist, dass die Zug- und Druckfestigkeit der Biegefeder für den Belastungsbereich individualisiert werden kann. Dadurch wird die Lebensdauer des Arbeitsgerätes verlängert und die Bauweise des Arbeitsgerätes wird kompakter. Eine weitere technische Wirkung liegt darin, dass eine stetige Geometrie, also ein sich langsam ändernder Krümmungsgradient, angestrebt wird, um Spannungsspitzen zu vermeiden. Dadurch wird ebenfalls die Lebensdauer des Arbeitsgerätes verlängert.

In einer weiteren optionalen Ausführungsform umfasst die Erfindung ein Arbeitsgerät, wobei die erste Außenseite und die zweite Außenseite einander gegenüber liegen und/oder parallel zueinander verlaufen. Der Ausdruck "einander gegenüber liegen" umfasst unter anderem, dass die beiden Außenseiten sich vorzugsweise nicht berühren. Der Ausdruck "parallel zueinander verlaufen" umfasst, dass die beiden Außenseiten zur Mittelebene der beiden Außenseiten den gleichen Abstand aufweisen. Der Begriff "Mittelebene" umfasst die Ebene, welche in der Mitte der beiden Außenseiten liegt. Mindestens eine technische Wirkung dieser Ausführungsform ist, dass eine Biegefeder, welche vorzugsweise ein Verbundmaterial umfasst, kompakt bzw. räumlich optimiert, gebaut werden kann und somit die Zugänglichkeit zu mehr - insbesondere zu schwierigen - Befestigungspunkten ermöglicht.

In einer weiteren optionalen Ausführungsform umfasst die Erfindung ein Arbeitsgerät, wobei der Rollenhalter und/oder der Stützhalter eine Anschlagfläche umfassen. Der Begriff "Anschlagfläche" umfasst dabei eine Fläche jeglicher Form - gekrümmt, zylindrisch oder eben - welche die Bewegung der Biegefeder entlang der Umfangsrichtung des Lagerelements oder entlang der Umfangsrichtung des Stützelements stoppen oder alternativ abbremsen kann. Mindestens eine technische Wirkung dieser optionalen Ausführungsform ist, dass dadurch die Funktionalität des Rollenhalters und/oder des Stützhalters verbessert wird. Dadurch wird die Zuverlässigkeit und die Lebensdauer des Arbeitsgerätes verbessert und verlängert.

In einer weiteren optionalen Ausführungsform umfasst die Erfindung ein Arbeitsgerät, wobei das Lagerelement und/oder das Stützelement fest oder drehbar ausgeführt ist. Der Begriff "fest" umfasst dabei, dass das Lagerelement sich nicht um seine Längsachse drehen kann. Der Begriff "drehbar" umfasst dabei, dass das Lagerelement sich um seine Längsachse drehen kann. Mindestens eine technische Wirkung dieser optionalen Ausführungsform ist es, dass der Rollenhalter zum Lagern der Biegefeder und/oder der Stützhalter zum Stützen der Biegefeder und somit des Energiespeichers im Arbeitsgerät einfach realisiert werden kann. Dies führt zu einem kleineren und leichteren Arbeitsgerät.

In einer weiteren optionalen Ausführungsform umfasst die Erfindung ein Arbeitsgerät, wobei ein erster Längsabschnitt eine größere Breite aufweist als ein zweiter Längsabschnitt und/oder als mindestens ein Krümmungsabschnitt. Mindestens eine technische Wirkung dieser optionalen Ausführungsform ist, dass Schubspannungsfestigkeit in diesem ersten Längsabschnitt mit größerer Breite höher ist als in dem zweiten Längsabschnitt und/oder als in dem mindesten einem Krümmungsabschnitt. Dadurch wird die zulässige Schubspannung der Biegefeder und somit die Lebensdauer des Arbeitsgerätes erhöht und die Bauweise des Arbeitsgerätes wird kompakter.

In einer weiteren optionalen Ausführungsform umfasst die Erfindung ein Arbeitsgerät, welches einen Arbeitsgerät-Wirkungsgrad zwischen 10% und 40%, vorzugsweise zwischen 20% und 30%, besonders bevorzugt von 25%, aufweist. Darüber hinaus kann das Arbeitsgerät auch einen Arbeitsgerät-Wirkungsgrad von 15% oder 35% aufweisen. Der Begriff "Arbeitsgerät-Wirkungsgrad" bezieht sich dabei auf das Verhältnis der Energie, die pro Eintreibvorgang an ein Befestigungselement übertragen wird zu der Energie, die pro Eintreibvorgang aus dem elektrischen Speicher einer elektrischen Batterie entnommen wird. Dadurch wird die Akkureichweite und des Arbeitsgerätes verlängert und die Batterie des Arbeitsgerätes muss weniger häufig geladen werden.

In einer weiteren optionalen Ausführungsform umfasst die Erfindung ein Arbeitsgerät, welches einen Energiespeicher-Wirkungsgrad zwischen 65% und 90%, vorzugsweise zwischen 70% und 85%, besonders bevorzugt von 80%, aufweist. Der Begriff "Energiespeicher-Wirkungsgrad" bezieht sich dabei auf das Verhältnis der Energie, die pro Eintreibvorgang an ein Befestigungselement übertragen wird zu der Energie, die pro Eintreibvorgang als potentielle Energie aus dem mechanischen Energiespeicher freigesetzt wird. Dadurch wird das Gewicht des Arbeitsgerätes reduziert, die Setzrate des Arbeitsgerätes erhöht und der Kühlbedarf des Arbeitsgerätes verringert.

In einer weiteren optionalen Ausführungsform umfasst die Erfindung ein Arbeitsgerät, wobei der Stützhalter mindestens zwei Stützkontaktflächen umfasst. Mindestens eine technische Wirkung dieser optionalen Ausführungsform ist, dass an einem Stützhalter mindestens zwei Biegefedern kontaktiert bzw. angebracht werden können. Dadurch wird die Bauweise des Arbeitsgerätes kompakter.

In einer weiteren optionalen Ausführungsform umfasst die Erfindung ein Arbeitsgerät, wobei der Stützhalter oder das Stützelement einen Dämpfer umfasst. Mindestens eine technische Wirkung dieser optionalen Ausführungsform ist, dass die durch die Biegefeder(n) übertragene Kraft auf den Stützhalter oder das Stützelement nicht vollständig auf das Gehäuse des Arbeitsgerätes übertragen wird sondern teilweise vom Dämpfer absorbiert wird. Dadurch wird die Lebensdauer des Arbeitsgerätes verlängert.

In einer weiteren optionalen Ausführungsform umfasst die Erfindung ein Arbeitsgerät, wobei der Längsabschnitt eine konstante Dicke und/oder eine konvergierende Dicke und/oder eine divergierende Dicke umfassen kann. Der Begriff "konstante Dicke" umfasst, dass der Abstand der ersten Außenfläche zur Mittelebene und der Abstand der zweiten Außenfläche zur Mittelebene im Längsabschnitt in Richtung der Setzrichtung X konstant bleiben kann. Der Begriff "konvergierende Dicke" umfasst, dass der Abstand der ersten Außenfläche zur Mittelebene und der Abstand der zweiten Außenfläche zur Mittelebene im Längsabschnitt in Richtung der Setzrichtung X abnehmen kann. Der Begriff "divergierende Dicke" umfasst, dass der Abstand der ersten Außenfläche zur Mittelebene und der Abstand der zweiten Außenfläche zur Mittelebene im Längsabschnitt in Richtung der Setzrichtung X zunehmen kann. Mindestens eine technische Wirkung dieser optionalen Ausführungsform ist, dass die Knickfestigkeit des Längsabschnitts und somit der Feder verbessert werden kann. Dadurch wird die Lebensdauer des Arbeitsgerätes verlängert. Mindestens eine weitere technische Wirkung dieser optionalen Ausführungsform ist, dass die Zug- und Druckfestigkeit des Längsabschnitts in Abhängigkeit der Belastung individualisiert werden kann. Dadurch wird das Gewicht des Arbeitsgerätes reduziert und die die Bauweise des Arbeitsgerätes wird kompakter.

In einer weiteren optionalen Ausführungsform umfasst die Erfindung ein Arbeitsgerät, wobei der erste Krümmungsradius und/oder der zweite Krümmungsradius mindestens einen Wert aus der folgenden Liste umfasst:
i. 12 mm;
ii. 15.5 mm;
iii. 19 mm;
iv. 22.5 mm;
v. 44 mm;
vi. 47.5 mm;
vii. 51 mm;
viii. 54.5 mm;
ix. 58 mm;
x. 68.5 mm;
xi. 72 mm;
xii. 75.5 mm.

Mindestens eine technische Wirkung dieser Ausführungsform besteht darin, dass der erste Krümmungsradius und/oder der zweite Krümmungsradius Werte umfassen, wodurch die Biegefeder eine für ein Arbeitsgerät, zum Eintreiben eines Befestigungselements in einen Untergrund, benötigte Zug- und Druckspannungsfestigkeit als auch Schubspannungsfestigkeit aufweist. Eine weitere technische Wirkung dieser Ausführungsform besteht darin, dass sowohl für die Zug- und Druckspannungsfestigkeit als auch für die Schubspannungsfestigkeit individualisierte, - der ausgelegten Belastung entsprechende - Werte realisiert werden können.

In einer weiteren optionalen Ausführungsform umfasst die Erfindung ein Arbeitsgerät und/oder einen Energiespeicher, wobei die Biegefeder mindestens eine Lage Gewebe und/oder Gelege umfasst. Der Begriff "Gewebe" umfasst unter anderem eine Lage, welche ebenfalls ein Matrixmaterial umfasst. Im Gegensatz dazu umfasst der Begriff "Gelege" eine Lage, welche kein Matrixmaterial umfasst. Mindestens eine technische Wirkung dieser Ausführungsform besteht darin, dass durch das Gewebe und/oder das Gelege eingeschlossene Luftblasen in dem Verbundmaterial besser vermieden werden und somit Spannungsspitzen in dem Verbundmaterial reduziert werden. Dadurch wird die Lebensdauer des Arbeitsgeräts und/oder des Energiespeichers erhöht.

In einer weiteren optionalen Ausführungsform umfasst die Erfindung ein Arbeitsgerät und/oder einen Energiespeicher, wobei die Biegefeder mindestens eine Lage Gewebe und/oder Gelege in der Mittelebene der Biegefeder aufweist. Mindestens eine technische Wirkung dieser Ausführungsform besteht darin, dass durch das Gewebe und/oder das Gelege in der Mittelebene der Biegefeder höhere Schubspannungsfestigkeiten durch Vermeidung von Lufteinschlüssen erreicht werden. Dadurch wird die Lebensdauer des Arbeitsgeräts und/oder des Energiespeichers erhöht.

In einer weiteren optionalen Ausführungsform umfasst die Erfindung ein Arbeitsgerät und/oder einen Energiespeicher, wobei die Biegefeder mindestens eine Lage Gewebe und /oder Gelege an der ersten und/oder zweiten Außenseite der Biegefeder aufweist. Mindestens eine technische Wirkung dieser Ausführungsform besteht darin, dass durch das Gewebe und/oder das Gelege die Außenseiten der Biegefeder verstärkt werden. Dadurch wird die Lebensdauer des Arbeitsgeräts und/oder des Energiespeichers erhöht. Insbesondere kann die Verschleißfestigkeit im Bereich des Lagerelements und/oder des Stützelements erhöht werden.

In einer weiteren optionalen Ausführungsform umfasst die Erfindung ein Arbeitsgerät und/oder einen Energiespeicher, wobei das verwendete Matrixmaterial mindestens einen Wert für die Schubspannungsfestigkeit aus der folgenden Liste umfasst:
i. 80 MPa;
ii. 90 MPa;
iii. 100 MPa;
iv. 110 MPa;
v. 120 MPa;
vi. 122 MPa;
vii. 130 MPa.

Mindestens eine technische Wirkung dieser optionalen Ausführungsform ist, dass die Schubspannungsfestigkeit der Biegefeder und somit auch des Energiespeichers und des Arbeitsgeräts erhöht wird. Dadurch wird die Lebensdauer des Arbeitsgerätes und des Energiespeichers verlängert.

In einer weiteren optionalen Ausführungsform umfasst die Erfindung ein Arbeitsgerät und/oder einen Energiespeicher, wobei die Biegefeder einen Ausnutzungsfaktor von mindestens 0.1, bevorzugt im Bereich von 0.11 bis 0.5, besonders bevorzugt im Bereich von 0.11 bis 0.33, aufweist. Der Begriff "Ausnutzungsfaktor" beschreibt das Verhältnis der Spannungen im Federquerschnitt gegenüber einer gleichmäßigen Spannungsverteilung. Die gleichmäßige Spannungsverteilung wird an die Spannung für die geplante Lebensdauer ausgelegt. Mindestens eine technische Wirkung dieser optionalen Ausführungsform ist, dass das Gewicht der Biegefeder und somit des Arbeitsgerätes reduziert werden kann. Dadurch wird die Bauweise des Arbeitsgerätes kompakter.

In einer weiteren optionalen Ausführungsform umfasst die Erfindung ein Arbeitsgerät und/oder einen Energiespeicher, wobei die Fasern des Verbundstoffmaterials eine Länge im Bereich von 20 bis 300 mm und/oder eine Breite im Bereich von 5 bis 30 mm aufweisen.

### Ausführungsbeispiele

Die Erfindung wird nachstehend anhand von Ausführungsbeispielen unter Bezugnahme auf die Zeichnungen näher erläutert.
Figur 1 zeigt eine Isometrische Ansicht (Figur 1a) und eine Seitenansicht (Figur 1b) einer erfindungsgemäßen Ausführungsform einer Biegefeder umfassend eine S-Form beziehungsweise eine Doppel-C-Form.
Figur 2 zeigt eine Isometrische Ansicht (Figur 2a) und eine Seitenansicht (Figur 2b) einer erfindungsgemäßen Ausführungsform einer Biegefeder umfassend eine Einfache-C-Form.
Figur 3 zeigt eine Isometrische Ansicht (Figur 3a) und eine Seitenansicht (Figur 3b) einer erfindungsgemäßen Ausführungsform einer Biegefeder umfassend eine M-Form beziehungsweise eine Dreifach-C-Form.
Figur 4 zeigt eine Isometrische Ansicht (Figur 4a) und eine Seitenansicht (Figur 4b) einer Biegefeder umfassend eine Doppel-S-Form beziehungsweise eine Vierfach-C-Form.
Figur 5 zeigt eine Isometrische Ansicht (Figur 5a) und eine Seitenansicht (Figur 5b) einer Biegefeder umfassend eine Fünffach-C-Form.
Figur 6 zeigt eine Seitenansicht einer erfindungsgemäßen Ausführungsform eines Arbeitsgerätes umfassend vier Biegefedern, welche jeweils eine S-Form beziehungsweise eine Doppel-C-Form aufweisen.
Figur 7 zeigt eine Isometrische Ansicht (Figur 7a), einen Längsschnitt (Figur 7b) und einen Querschnitt (Figur 7c) einer erfindungsgemäßen Ausführungsform eines Energiespeichers, umfassend vier Biegefedern, welche jeweils eine S-Form beziehungsweise eine Doppel-C-Form aufweisen und innerhalb des Energieübertragungsband angeordnet sind.
Figur 8 zeigt eine Isometrische Ansicht (Figur 8a) und einen Querschnitt (Figur 8b) einer erfindungsgemäßen Ausführungsform eines Energiespeichers, umfassend vier Biegefedern, welche jeweils eine S-Form beziehungsweise eine Doppel-C-Form aufweisen und neben dem Energieübertragungsband angeordnet sind.
Figur 9 zeigt eine weitere erfindungsgemäßen Ausführungsform eines Energiespeichers, umfassend vier Biegefedern, welche jeweils eine Einfach-C-Form aufweisen und innerhalb des Energieübertragungsband angeordnet sind.
Figur 10 zeigt eine weitere erfindungsgemäßen Ausführungsform eines Energiespeichers, umfassend vier Biegefedern, welche jeweils eine Einfach-C-Form aufweisen und außerhalb des Energieübertragungsband angeordnet sind.
Figur 11 zeigt eine weitere erfindungsgemäßen Ausführungsform eines Energiespeichers, umfassend vier Biegefedern, welche jeweils eine Dreifach-C-Form aufweisen und innerhalb des Energieübertragungsband angeordnet sind.
Figur 12 zeigt eine weitere erfindungsgemäßen Ausführungsform eines Energiespeichers, umfassend vier Biegefedern, welche jeweils eine Dreifach-C-Form aufweisen und außerhalb des Energieübertragungsband angeordnet sind.
Figur 13 zeigt eine weitere erfindungsgemäßen Ausführungsform eines Energiespeichers, umfassend vier Biegefedern, welche jeweils eine Vierfach-C-Form aufweisen und innerhalb des Energieübertragungsband angeordnet sind.
Figur 14 zeigt eine weitere erfindungsgemäßen Ausführungsform eines Energiespeichers, umfassend vier Biegefedern, welche jeweils eine Vierfach-C-Form aufweisen und außerhalb des Energieübertragungsband angeordnet sind.
Figur 15 zeigt eine weitere erfindungsgemäßen Ausführungsform eines Energiespeichers, umfassend vier Biegefedern, welche jeweils eine Fünffach-C-Form aufweisen und innerhalb des Energieübertragungsband angeordnet sind.
Figur 16 zeigt eine weitere erfindungsgemäßen Ausführungsform eines Energiespeichers, umfassend vier Biegefedern, welche jeweils eine Fünffach-C-Form aufweisen und außerhalb des Energieübertragungsband angeordnet sind.
Figur 17 zeigt eine weitere erfindungsgemäßen Ausführungsform einer Biegefeder umfassend eine S-Form beziehungsweise eine Doppel-C-Form, wobei die Biegefeder ein Gewebe oder Gelege in der Mittelebene (Figur 17a), ein Gewebe oder Gelege an den Außenseiten (Figur 17b) oder Gewebe oder Gelege in der Mittelebene und an den Außenseiten (Figur 17c) aufweist.

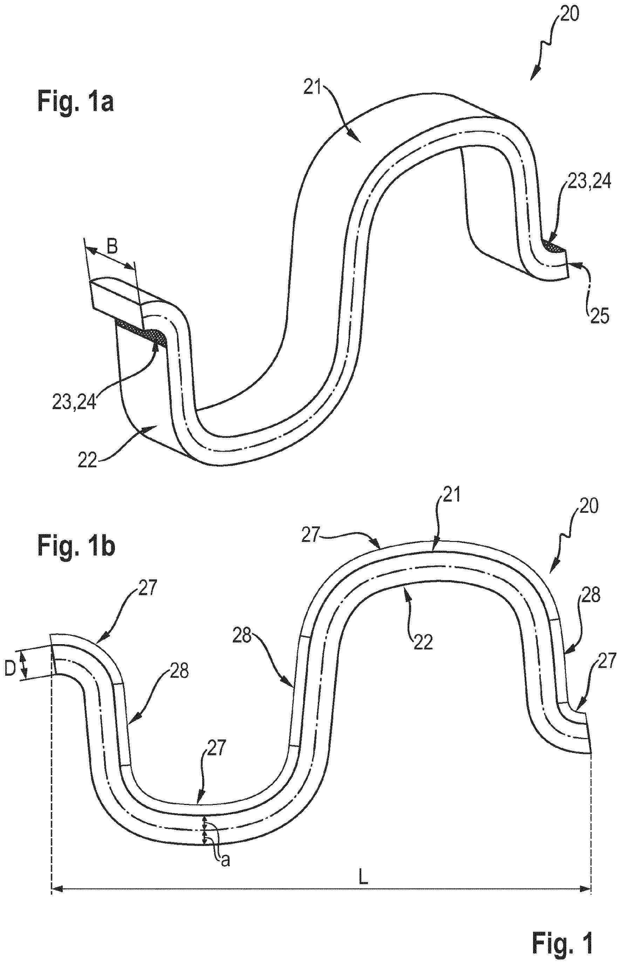

Figur 1 zeigt eine Isometrische Ansicht (Figur 1a) und eine Seitenansicht (Figur 1b) einer erfindungsgemäßen Ausführungsform einer Biegefeder 20 umfassend eine S-Form beziehungsweise eine Doppel-C-Form. Die Biegefeder 20 umfasst die Länge L, die Breite B und die Dicke D. Diese Ausführungsform umfasst eine erste Außenseite 21 und eine zweite Außenseite 22. In der Mitte der beiden Außenseiten 21 und 22 befindet sich die Mittelebene 25. Die Mittelebene 25 hat über die gesamte Länge L den gleichen Abstand a zur ersten Außenseite 21 und zur zweiten Außenseite 22. Dabei umfasst die Dicke D zweimal den Abstand a. Die Biegefeder hat zudem zwei Flächen 23 und 24, welche sowohl als Lagerkontaktfläche 23 als auch Stützkontaktfläche 24 in einem erfindungsgemäßen Arbeitsgerät verwendet werden können. In diesem Ausführungsbeispiel umfasst die Biegefeder sowohl auf der ersten Außenseite 21 als auch auf der zweiten Außenseite 22 eine Fläche 23, 24 , welche als Lagerkontaktfläche 23 und/oder Stützfläche 24 verwendet werden kann. In diesem Beispiel ist die Lagerkontaktfläche 23 bzw. die Stützkontaktfläche 24 konkav ausgebildet. Figur 1 zeigt zudem eine Ausführungsform mit vier Krümmungsabschnitten 27 und drei Längsabschnitten 28. Die Krümmungsradien der ersten Außenseite 21 und der zweiten Außenseite 22 sind für den Fachmann klar ersichtlich. Es wird aus Übersichtlichkeitsgründen auf eine Markierung der Krümmungsradien verzichtet.

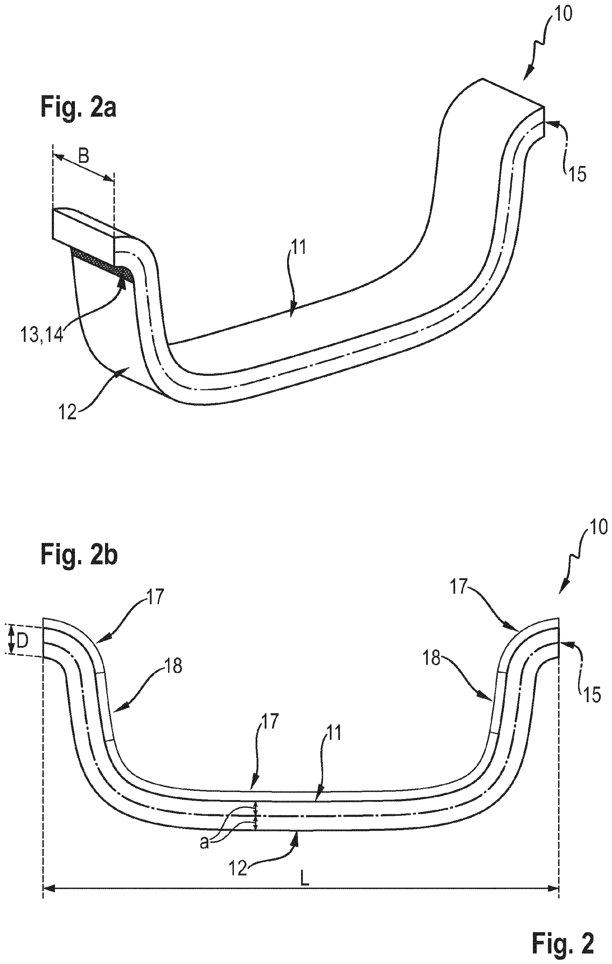

Figur 2 zeigt eine Isometrische Ansicht (Figur 2a) und eine Seitenansicht (Figur 2b) einer erfindungsgemäßen Ausführungsform einer Biegefeder 10 umfassend eine Einfache-C-Form. Die Biegefeder umfasst die Länge L, die Breite B und die Dicke D. Diese Ausführungsform umfasst eine erste Außenseite 11 und eine zweite Außenseite 12. In der Mitte der beiden Außenseiten 11 und 12 befindet sich die Mittelebene 15. Die Mittelebene 15 hat über die gesamte Länge L den gleichen Abstand a zur ersten Außenseite 11 wie zur zweiten Außenseite 12. Dabei umfasst die Dicke D zweimal den Abstand a. Die Biegefeder 10 hat zudem zwei Flächen, welche sowohl als Lagerkontaktfläche 13 als auch als Stützkontaktfläche 14 in einem erfindungsgemäßen Arbeitsgerät verwendet, werden können. In diesem Ausführungsbeispiel umfasst die Biegefeder sowohl auf der ersten Außenseite 11 als auch auf der zweiten Außenseite 12 eine Fläche, welche als Lagerkontaktfläche 13 und/oder Stützfläche 14 verwendet werden kann. In diesem Beispiel ist die Lagerkontaktfläche 13 bzw. die Stützkontaktfläche 14 konkav ausgebildet. Figur 2 zeigt zudem eine Ausführungsform mit drei Krümmungsabschnitten 17 und zwei Längsabschnitten 18. Die Krümmungsradien der ersten Außenseite 11 und der zweiten Außenseite 12 sind für den Fachmann klar ersichtlich. Es wird aus Übersichtlichkeitsgründen auf eine Markierung der Krümmungsradien verzichtet.

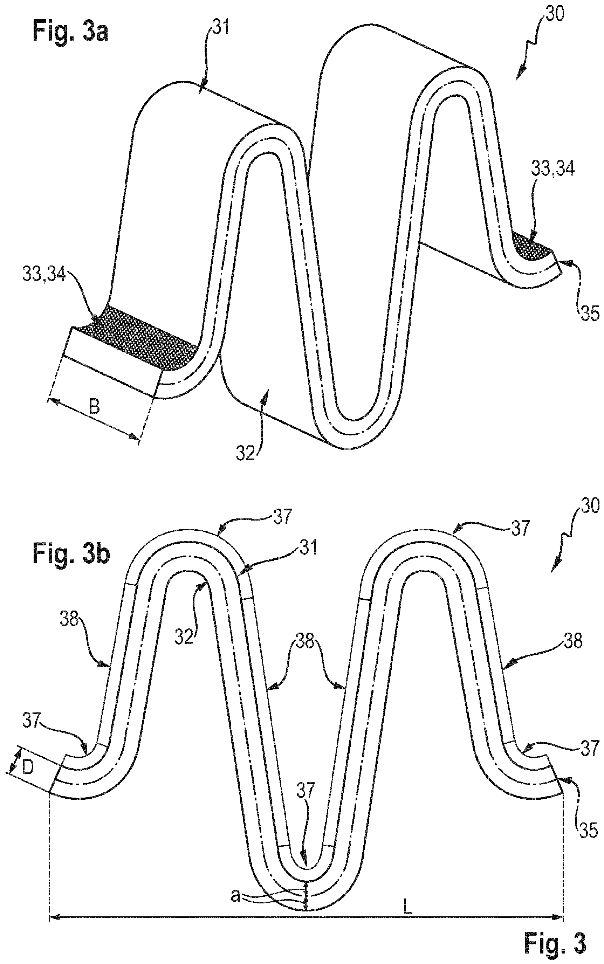

Figur 3 zeigt eine Isometrische Ansicht (Figur 3a) und eine Seitenansicht (Figur 3b) einer erfindungsgemäßen Ausführungsform einer Biegefeder 30 umfassend eine M-Form beziehungsweise eine Dreifach-C-Form. Die Biegefeder 30 umfasst die Länge L, die Breite B und die Dicke D. Diese Ausführungsform umfasst eine erste Außenseite 31 und eine zweite Außenseite 32. In der Mitte der beiden Außenseiten 31 und 32 befindet sich die Mittelebene 35. Die Mittelebene 35 hat über die gesamte Länge L den gleichen Abstand a zur ersten Außenseite 31 wie zur zweiten Außenseite 32. Dabei umfasst die Dicke D zweimal den Abstand a. Die Biegefeder hat zudem zwei Flächen, welche sowohl als Lagerkontaktfläche 33 als auch als Stützkontaktfläche 34 in einem erfindungsgemäßen Arbeitsgerät verwendet, werden können. In diesem Ausführungsbeispiel umfasst die Biegefeder sowohl auf der ersten Außenseite 31 als auch auf der zweiten Außenseite 32 eine Fläche, welche als Lagerkontaktfläche 33 und/oder Stützfläche 34 verwendet werden kann. In diesem Beispiel ist die Lagerkontaktfläche 33 bzw. die Stützkontaktfläche 34 konkav ausgebildet. Figur 3 zeigt zudem eine Ausführungsform mit fünf Krümmungsabschnitten 37 und vier Längsabschnitten 38. Die Krümmungsradien der ersten Außenseite 31 und der zweiten Außenseite 32 sind für den Fachmann klar ersichtlich. Es wird aus Übersichtlichkeitsgründen auf eine Markierung der Krümmungsradien verzichtet.

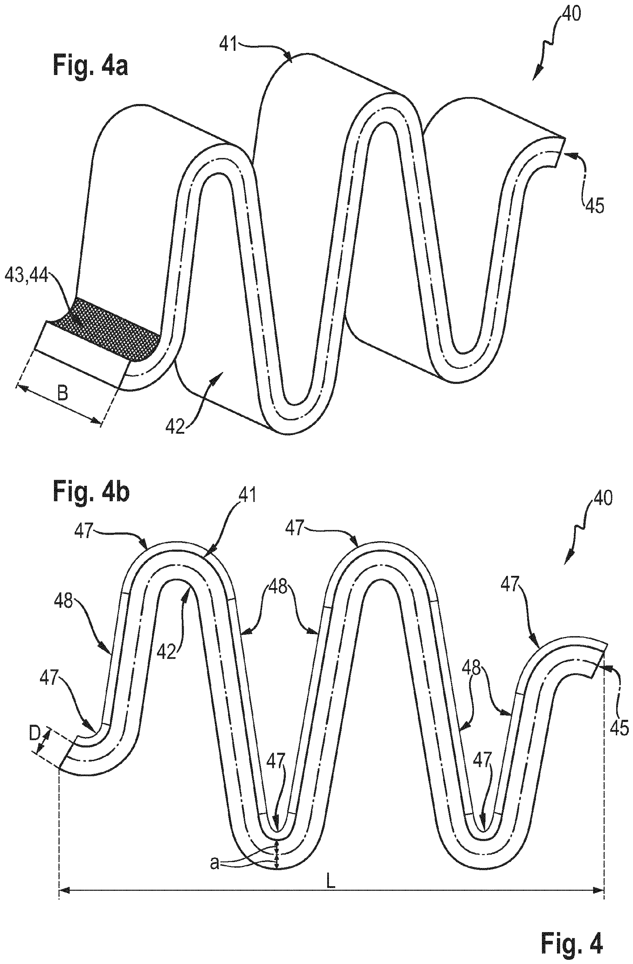

Figur 4 zeigt eine Isometrische Ansicht (Figur 4a) und eine Seitenansicht (Figur 4b) einer erfindungsgemäßen Ausführungsform einer Biegefeder 40 umfassend eine Doppel-S-Form beziehungsweise eine Vierfach-C-Form. Die Biegefeder 40 umfasst um die Länge L, die Breite B und die Dicke D. Diese Ausführungsform umfasst eine erste Außenseite 41 und eine zweite Außenseite 42. In der Mitte der beiden Außenseiten 41 und 42 befindet sich die Mittelebene 45. Die Mittelebene 45 hat über die gesamte Länge L den gleichen Abstand a zur ersten Außenseite 41 wie zur zweiten Außenseite 42. Dabei umfasst die Dicke D zweimal den Abstand a. Die Biegefeder 40 hat zudem zwei Flächen, welche sowohl als Lagerkontaktfläche 43 als auch als Stützkontaktfläche 44 in einem erfindungsgemäßen Arbeitsgerät verwendet, werden können. In diesem Ausführungsbeispiel umfasst die Biegefeder 40 sowohl auf der ersten Außenseite 41 als auch auf der zweiten Außenseite 42 eine Fläche, welche als Lagerkontaktfläche 43 und/oder Stützfläche 44 verwendet werden kann. In diesem Beispiel ist die Lagerkontaktfläche 43 bzw. die Stützkontaktfläche 44 konkav ausgebildet. Figur 4 zeigt zudem eine Ausführungsform mit sechs Krümmungsabschnitten 47 und fünf Längsabschnitten 48. Die Krümmungsradien der ersten Außenseite 41 und der zweiten Außenseite 42 sind für den Fachmann klar ersichtlich. Es wird aus Übersichtlichkeitsgründen auf eine Markierung der Krümmungsradien verzichtet.

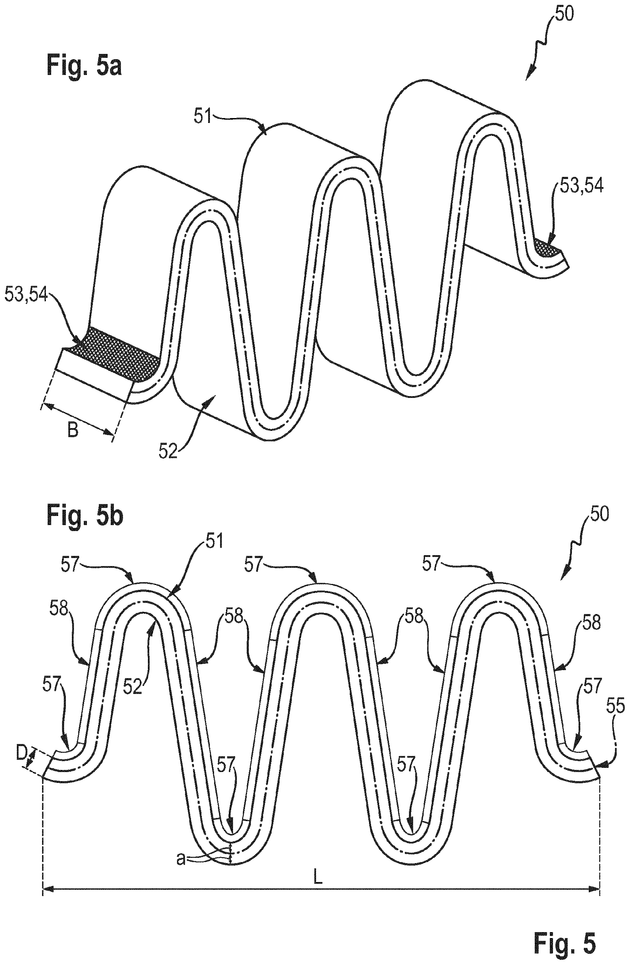

Figur 5 zeigt eine Isometrische Ansicht (Figur 5a) und eine Seitenansicht (Figur 5b) einer erfindungsgemäßen Ausführungsform einer Biegefeder 50 umfassend eine Fünffach-C-Form. Die Biegefeder 50 umfasst die Länge L, die Breite B und die Dicke D. Diese Ausführungsform umfasst eine erste Außenseite 51 und eine zweite Außenseite 52. In der Mitte der beiden Außenseiten 51 und 52 befindet sich die Mittelebene 55. Die Mittelebene 55 hat über die gesamte Länge L den gleichen Abstand a zur ersten Außenseite 51 wie zur zweiten Außenseite 52. Dabei umfasst die Dicke D zweimal den Abstand a. Die Biegefeder 50 hat zudem zwei Flächen, welche sowohl als Lagerkontaktfläche 53 als auch als Stützkontaktfläche 54 in einem erfindungsgemäßen Arbeitsgerät verwendet, werden können. In diesem Ausführungsbeispiel umfasst die Biegefeder 50 sowohl auf der ersten Außenseite 51 als auch auf der zweiten Außenseite 52 eine Fläche, welche als Lagerkontaktfläche 53 und/oder Stützfläche 54 verwendet werden kann. In diesem Beispiel ist die Lagerkontaktfläche 53 bzw. die Stützkontaktfläche 54 konkav ausgebildet. Figur 5 zeigt zudem eine Ausführungsform mit sieben Krümmungsabschnitten 57 und sechs Längsabschnitten 58. Die Krümmungsradien der ersten Außenseite 51 und der zweiten Außenseite 52 sind für den Fachmann klar ersichtlich. Es wird aus Übersichtlichkeitsgründen auf eine Markierung der Krümmungsradien verzichtet.

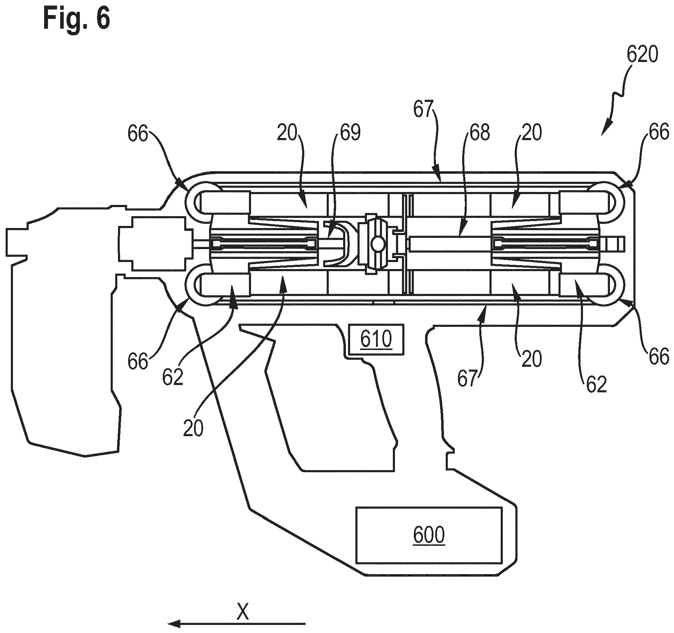

Figur 6 zeigt ein erstes Ausführungsbeispiel für ein erfindungsgemäßes Arbeitsgerät 620 umfassend ein Energieübertragungssystem 600 eine elektrische Energiequelle 690 (hier ein Akku), einen elektrischen Motor (hier nicht dargestellt) und einen Auslöser 610. Das Energieübertragungssystem 600 umfasst zur Speicherung von mechanischer Energie einen Energiespeicher mit vier Biegefedern 20 mit jeweils einer Zweifach-C-Form, zwei Rollenhalter 62 mit insgesamt vier Rollenelementen 66 - also zwei Rollenelemente 66 per Rollenhalter 62 -, ein Energieübertragungsband 67, eine Spindel 68 (hier dargestellt ohne Gewinde) und ein Energieübertragungselement 69 (auch Arbeitskolben genannt) zum Eintreiben eines Befestigungselements in einen Untergrund. Um ein Befestigungselement in einen Untergrund eintrieben zu können, wird zunächst elektrische Energie aus der elektrischen Energiequelle 690 entnommen und einem elektrischen Motor (hier nicht dargestellt) zugeführt. Der elektrische Motor wandelt die elektrische Energie in eine Rotationsbewegung um, welche wiederum die Spindel 68 in eine translatorische Bewegung versetzt. Bewegt sich die Spindel 68 in Richtung der Setzrichtung X, so bewegen sich auch die Rollenhalter 62 und somit auch jeweils deren beiden Rollenelemente 66 aufeinander zu. Dadurch werden die vier Biegefedern 20 des Energiespeichers komprimiert und speichern mechanische Energie. Die gespeicherte mechanische Energie im Energiespeicher wird durch Betätigen des Auslösers 610 mittels des Energieübertragungsbandes 67 auf das Energieübertragungselement 69 übertragen und ein Befestigungselement in einen Untergrund getrieben.

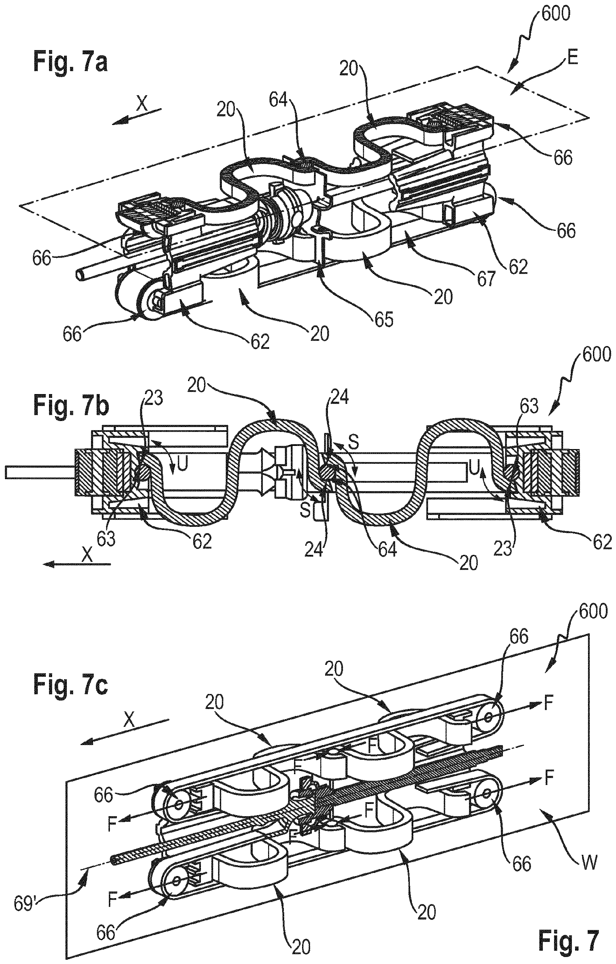

Figur 7a zeigt eine isometrische Ansicht eines erfindungsgemäßen Energieübertragungssystems 600, wobei entlang der Setzrichtung X durch den oberen Teil des Energieübertragungssystems 600, ein Schnitt mittels der Schnittebene E dargestellt ist. Figur 7b offenbart dieselbe Ausführungsform wie Figur 7a umfassend eine Draufsicht auf das Energiespeichersystem und die Ebene E (nicht dargestellt in Figur 7b). Die Figuren 7a und 7b zeigen dieselbe Ausführungsform des Energieübertragungssystem 600 wie im Arbeitsgerät von Figur 6. Das Energieübertragungssystem 600 offenbart einen Energiespeicher umfassend vier Biegefedern 20 mit jeweils einer Zweifach-C-Form. Die vier Biegefedern 20 sind innerhalb des Energieübertragungsbandes 67 angeordnet Das Energieübertragungssystem 600 weist zudem zwei Rollenhalter 62 auf, welche sowohl ein Lagerelement 63 als auch jeweils zwei Rollenelemente 76 umfassen. Die Draufsicht der Schnittebene E (Figur 7b) zeigt zwei Biegefedern 20 mit jeweils einer Zweifach-C-Form. Beide Biegefedern 20 sind an jeweils einem Rollenhalter 62 und an einem gemeinsamen Stützhalter 65 gelagert.

Figur 7b zeigt für jede der beiden Biegefedern 20 eine Lagerkontaktfläche 23 und die dazu korrespondierende, d.h. direkt angrenzende, Mantelfläche eines Lagerelements 63 des Rollenhalters 62. Das Lagerelement 63 und die Lagerkontaktfläche 23 sind derart miteinander kontaktiert, sodass eine relative Bewegung zwischen der Lagerkontaktfläche 23 der Biegefeder 20 und der korrespondierenden Mantelfläche des Lagerelements 63 in einer Umfangsrichtung (Pfeil U) des Lagerelements möglich ist. Die relative Bewegung erfolgt, sobald das Energieübertragungssystem 600 mechanische Energie aufnimmt oder abgibt. Dies ist der Fall, sobald die Biegefedern 20 gespannt oder entspannt werden. In diesem Ausführungsbeispiel sind die Mantelflächen des Lagerelements 63 konvex und die Lagerkontaktflächen 23 der beiden Biegefedern 20 konkav ausgestaltet. In Figur 7b ist zu erkennen, dass jede der beiden Biegefedern 20 zudem eine Stützkontaktfläche 24 aufweist. Diese Stützkontaktflächen 24 der beiden Biegefedern 20 kontaktieren die Mantelfläche des Stützelements 64 derart, dass eine relative Bewegung zwischen den Stützkontaktflächen 24 der Biegefedern 20 und der Mantelfläche des Stützelements 64 in einer Umfangsrichtung S (Pfeil S) des Stützelements möglich ist. Somit können durch ein Stützelement 64 zwei Biegefedern 20 kontaktiert und gelagert werden. Dies führt zu einem kleineren und leichteren Arbeitsgerät. In diesem Ausführungsbeispiel sind die Mantelflächen des Stützelements 64 konvex und die Stützkontaktflächen 24 der beiden Biegefedern 20 konkav ausgestaltet. Die relativen Bewegungen der Biegefeder 20 gegenüber der Lagerkontaktfläche 23 und der Stützkontaktfläche 24 erfolgt, sobald das Energieübertragungssystem 600 mechanische Energie aufnimmt oder abgibt. Der Stützhalter 65 ist fest mit dem Gehäuse des Arbeitsgerätes (siehe Figur 6a und 6b) verbunden. Somit ist der Stützhalter 65 im Gehäuse des Arbeitsgerätes fest positioniert und die Position des Stützhalters ändert sich auch nicht, wenn mechanische Energie in das Energieübertragungssystem eingeführt oder herausgenommen wird. Dadurch kann der Stützhalter 65 die vier Biegefedern 20 der gezeigten Ausführungsform stützen und/oder fixieren. Dies führt zu einem kleineren und leichteren Arbeitsgerät.

Figur 7c zeigt eine weitere isometrische Ansicht desselben erfindungsgemäßen Energieübertragungssystems 600, wie die Figuren 7a und 7b. Figur 7c zeigt zudem entlang der Setzrichtung X einen Schnitt durch das Energieübertragungssystems 600 mittels der Wirkungsebene W. Einzig die Biegefedern 20 werden in Figur 7c nicht geschnitten dargestellt. Das Energieübertragungssystem 600 offenbart einen Energiespeicher umfassend vier Biegefedern 20 mit jeweils einer Zweifach-C-Form. Die vier Biegefedern 20 sind innerhalb des Energieübertragungsbandes 67 angeordnet. Figur 7c zeigt zudem auch die Kräfte F die von den vier Biegefedern auf das Stützelement und die Lagerelemente übertragen werden. Dabei liegen alle resultierenden Kräfte F in der gleichen Wirkungsebene W. Die Längsachse des Energieübertragungselementes 69' befindet sich zumindest teilweise in der Wirkungsebene W.

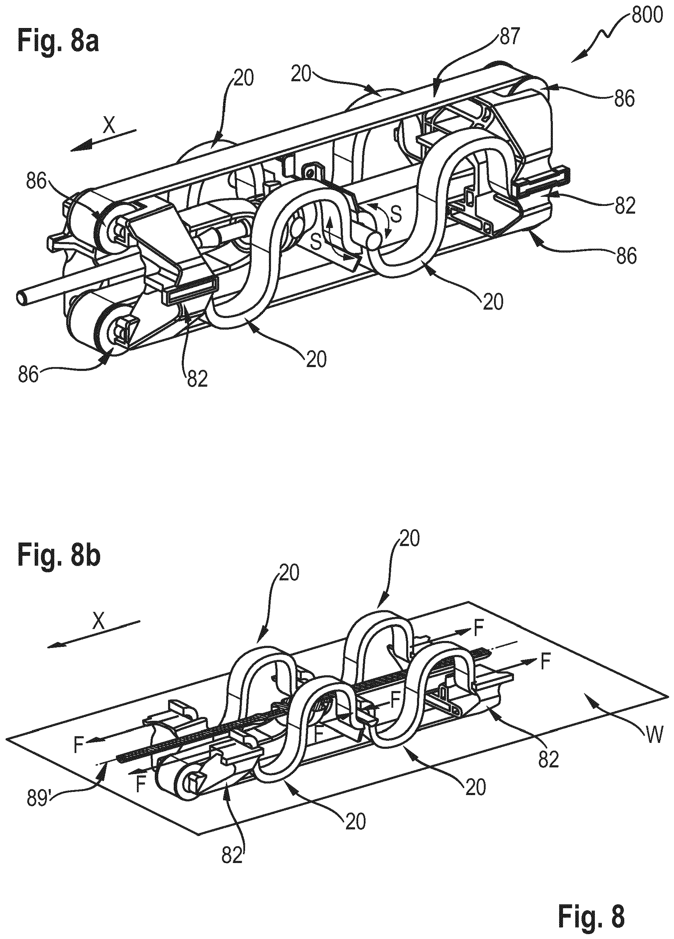

Figur 8a zeigt eine Isometrische Ansicht einer weiteren erfindungsgemäßen Ausführungsform eines Energieübertragungssystems 800. Das Energieübertragungssystem 800 offenbart einen Energiespeicher umfassend vier Biegefedern 20 mit jeweils einer Zweifach-C-Form. Die vier Biegefedern 20 sind außerhalb des Energieübertragungsbandes 87 angeordnet Das Energieübertragungssystem 800 weist zudem zwei Rollenhalter 82 auf, welche sowohl ein Lagerelement (nicht gezeigt) als auch jeweils zwei Rollenelemente 86 umfassen. Die Biegefedern 20 sind an jeweils einem Rollenhalter 82 und an einem gemeinsamen Stützhalter 85 gelagert. Die Stützkontaktflächen 24 (hier nicht gezeigt) der Biegefedern 20 kontaktieren die Mantelfläche des Stützelements 84 derart, dass eine relative Bewegung zwischen den Stützkontaktflächen 24 der Biegefedern 20 und der Mantelfläche des Stützelements 84 in einer Umfangsrichtung S (Pfeil S) des Stützelements 84 möglich ist. Somit können durch ein Stützelement 84 vier Biegefedern 20 kontaktiert und gelagert werden. Dies führt zu einem kleineren und leichteren Arbeitsgerät. In diesem Ausführungsbeispiel sind die Mantelfläche des Stützelements 84 konvex und die Stützkontaktflächen 24 der Biegefedern 20 konkav ausgestaltet. Die relativen Bewegungen der Biegefeder 20 gegenüber der Lagerkontaktfläche 83 und der Stützkontaktfläche 84 erfolgt, sobald das Energieübertragungssystem 800 mechanische Energie aufnimmt oder abgibt. Der Stützhalter 85 ist fest mit dem Gehäuse des Arbeitsgerätes verbunden. Somit ist der Stützhalter 85 im Gehäuse des Arbeitsgerätes fest positioniert und die Position des Stützhalters ändert sich auch nicht, wenn mechanische Energie in das Energieübertragungssystem eingeführt oder herausgenommen wird. Dadurch kann der Stützhalter 85 die vier Biegefedern 20 der gezeigten Ausführungsform stützen und/oder fixieren. Dies führt zu einem kleineren und leichteren Arbeitsgerät.

Figur 8b zeigt eine weitere isometrische Ansicht desselben erfindungsgemäßen Energieübertragungssystems 800, wie die Figur 8a. Figur 8b zeigt zudem entlang der Setzrichtung X einen Schnitt durch das Energieübertragungssystems 800 mittels der Wirkungsebene W. Einzig die Biegefedern 20 werden in Figur 8b nicht geschnitten dargestellt. Das Energieübertragungssystem 800 offenbart einen Energiespeicher umfassend vier Biegefedern 20 mit jeweils einer Zweifach-C-Form. Die vier Biegefedern 20 sind außerhalb des Energieübertragungsbandes 87 angeordnet. Figur 8b zeigt zudem auch die Kräfte F die von den vier Biegefedern auf das Stützelement und die Lagerelemente 82 übertragen werden. Dabei liegen alle resultierenden Kräfte F in der gleichen Wirkungsebene W. Die Längsachse des Energieübertragungselementes 89' befindet sich zumindest teilweise in der Wirkungsebene W.

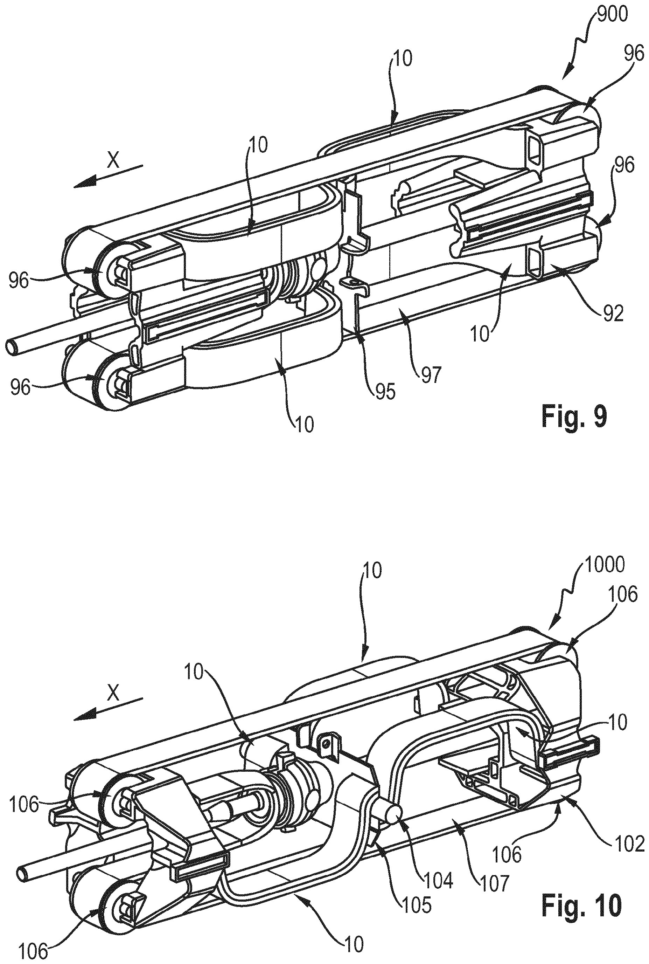

Figur 9 zeigt eine Isometrische Ansicht einer weiteren erfindungsgemäßen Ausführungsform eines Energieübertragungssystems 900. Das Energieübertragungssystem 900 offenbart einen Energiespeicher umfassend vier Biegefedern 10 mit jeweils einer Einfach-C-Form. Die vier Biegefedern 10 sind innerhalb des Energieübertragungsbandes 97 angeordnet Das Energieübertragungssystem 900 weist zudem zwei Rollenhalter 92 auf, welche sowohl ein Lagerelement (nicht gezeigt) als auch jeweils zwei Rollenelemente 96 umfassen. Die Biegefedern 10 sind an jeweils einem Rollenhalter 92 und an einem gemeinsamen Stützhalter 95 gelagert.

Figur 10 zeigt eine Isometrische Ansicht einer weiteren erfindungsgemäßen Ausführungsform eines Energieübertragungssystems 1000. Das Energieübertragungssystem 1000 offenbart einen Energiespeicher umfassend vier Biegefedern 10 mit jeweils einer Einfach-C-Form. Die vier Biegefedern 10 sind außerhalb des Energieübertragungsbandes 107 angeordnet Das Energieübertragungssystem 1000 weist zudem zwei Rollenhalter 102 auf, welche sowohl ein Lagerelement (nicht gezeigt) als auch jeweils zwei Rollenelemente 106 umfassen. Die Biegefedern 10 sind an jeweils einem Rollenhalter 102 und an einem gemeinsamen Stützhalter 105 gelagert.

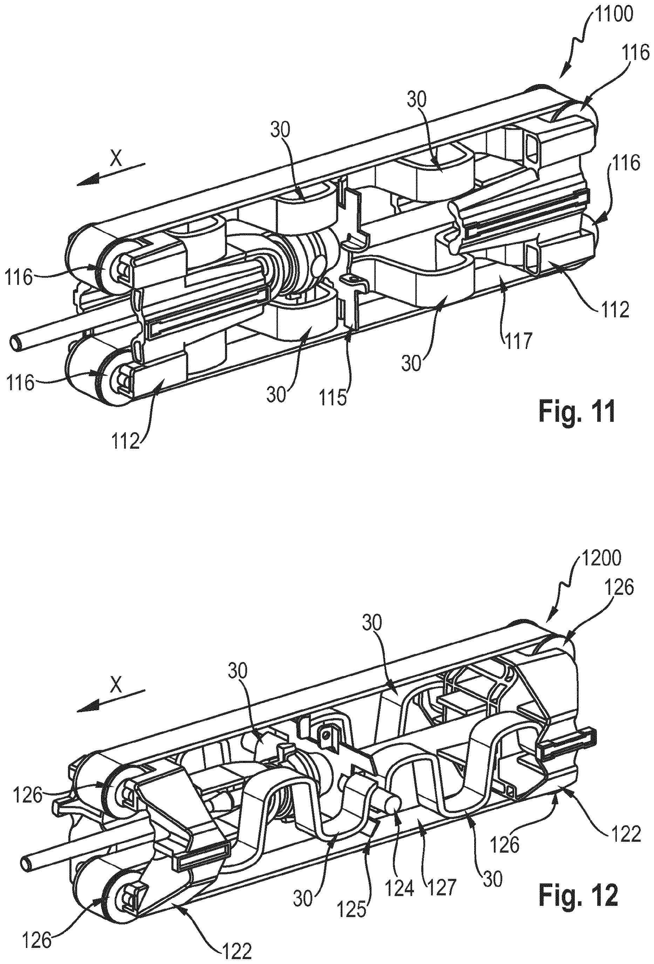

Figur 11 zeigt eine Isometrische Ansicht einer weiteren erfindungsgemäßen Ausführungsform eines Energieübertragungssystems 1100. Das Energieübertragungssystem 1100 offenbart einen Energiespeicher umfassend vier Biegefedern 30 mit jeweils einer Dreifach-C-Form. Die vier Biegefedern 30 sind innerhalb des Energieübertragungsbandes 117 angeordnet Das Energieübertragungssystem 1100 weist zudem zwei Rollenhalter 112 auf, welche sowohl ein Lagerelement (nicht gezeigt) als auch jeweils zwei Rollenelemente 116 umfassen. Die Biegefedern 30 sind an jeweils einem Rollenhalter 112 und an einem gemeinsamen Stützhalter 115 gelagert.

Figur 12 zeigt eine Isometrische Ansicht einer weiteren erfindungsgemäßen Ausführungsform eines Energieübertragungssystems 1200. Das Energieübertragungssystem 1200 offenbart einen Energiespeicher umfassend vier Biegefedern 30 mit jeweils einer Dreifach-C-Form. Die vier Biegefedern 30 sind außerhalb des Energieübertragungsbandes 127 angeordnet Das Energieübertragungssystem 1200 weist zudem zwei Rollenhalter 122 auf, welche sowohl ein Lagerelement (nicht gezeigt) als auch jeweils zwei Rollenelemente 126 umfassen. Die Biegefedern 30 sind an jeweils einem Rollenhalter 122 und an einem gemeinsamen Stützhalter 125 gelagert.

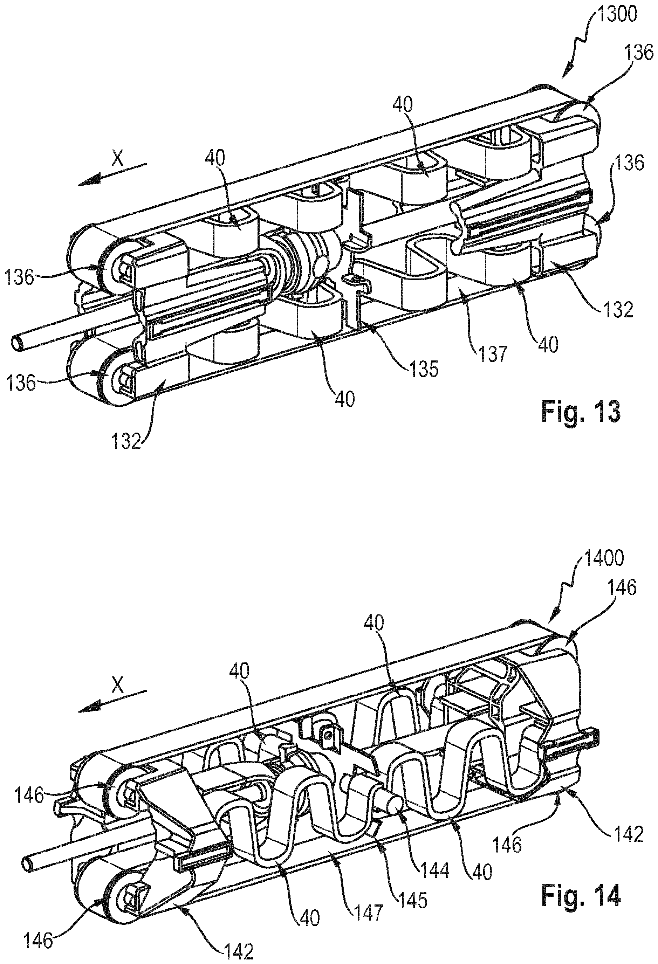

Figur 13 zeigt eine Isometrische Ansicht einer weiteren erfindungsgemäßen Ausführungsform eines Energieübertragungssystems 1300. Das Energieübertragungssystem 1300 offenbart einen Energiespeicher umfassend vier Biegefedern 40 mit jeweils einer Vierfach-C-Form. Die vier Biegefedern 40 sind innerhalb des Energieübertragungsbandes 137 angeordnet Das Energieübertragungssystem 1300 weist zudem zwei Rollenhalter 132 auf, welche sowohl ein Lagerelement (nicht gezeigt) als auch jeweils zwei Rollenelemente 136 umfassen. Die Biegefedern 40 sind an jeweils einem Rollenhalter 132 und an einem gemeinsamen Stützhalter 135 gelagert.

Figur 14 zeigt eine Isometrische Ansicht einer weiteren erfindungsgemäßen Ausführungsform eines Energieübertragungssystems 1400. Das Energieübertragungssystem 1400 offenbart einen Energiespeicher umfassend vier Biegefedern 40 mit jeweils einer Vierfach-C-Form. Die vier Biegefedern 40 sind außerhalb des Energieübertragungsbandes 147 angeordnet Das Energieübertragungssystem 1400 weist zudem zwei Rollenhalter 142 auf, welche sowohl ein Lagerelement (nicht gezeigt) als auch jeweils zwei Rollenelemente 146 umfassen. Die Biegefedern 40 sind an jeweils einem Rollenhalter 142 und an einem gemeinsamen Stützhalter 145 gelagert.

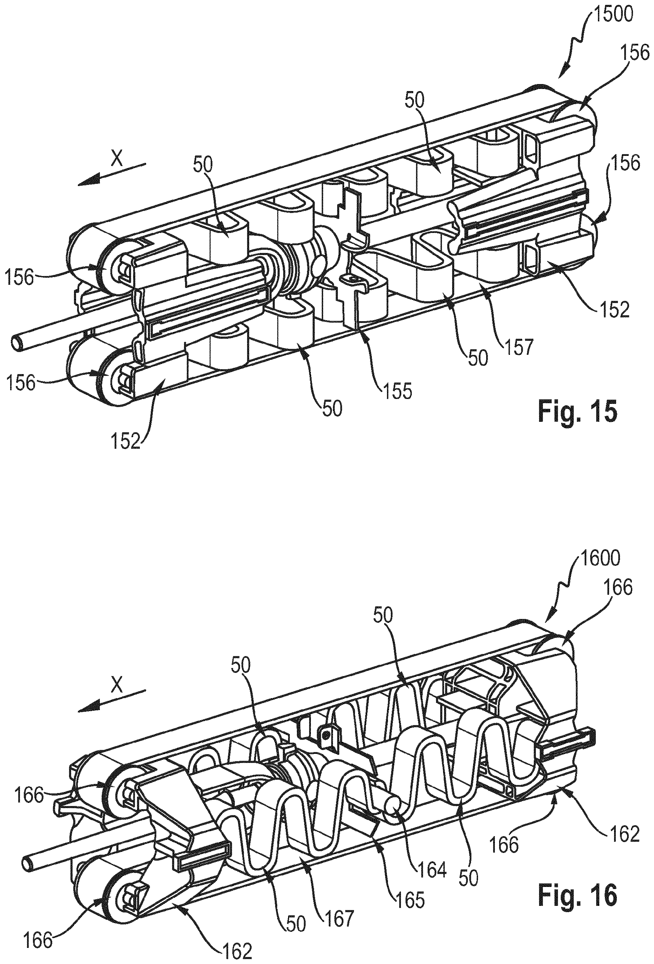

Figur 15 zeigt eine Isometrische Ansicht einer weiteren erfindungsgemäßen Ausführungsform eines Energieübertragungssystems 1500. Das Energieübertragungssystem 1500 offenbart einen Energiespeicher umfassend vier Biegefedern 50 mit jeweils einer Fünffach-C-Form. Die vier Biegefedern 50 sind innerhalb des Energieübertragungsbandes 157 angeordnet Das Energieübertragungssystem 1500 weist zudem zwei Rollenhalter 152 auf, welche sowohl ein Lagerelement (nicht gezeigt) als auch jeweils zwei Rollenelemente 156 umfassen. Die Biegefedern 50 sind an jeweils einem Rollenhalter 152 und an einem gemeinsamen Stützhalter 155 gelagert.

Figur 16 zeigt eine Isometrische Ansicht einer weiteren erfindungsgemäßen Ausführungsform eines Energieübertragungssystems 1600. Das Energieübertragungssystem 1600 offenbart einen Energiespeicher umfassend vier Biegefedern 50 mit jeweils einer Fünffach-C-Form. Die vier Biegefedern 50 sind außerhalb des Energieübertragungsbandes 167 angeordnet Das Energieübertragungssystem 1600 weist zudem zwei Rollenhalter 162 auf, welche sowohl ein Lagerelement (nicht gezeigt) als auch jeweils zwei Rollenelemente 166 umfassen. Die Biegefedern 50 sind an jeweils einem Rollenhalter 162 und an einem gemeinsamen Stützhalter 165 gelagert.

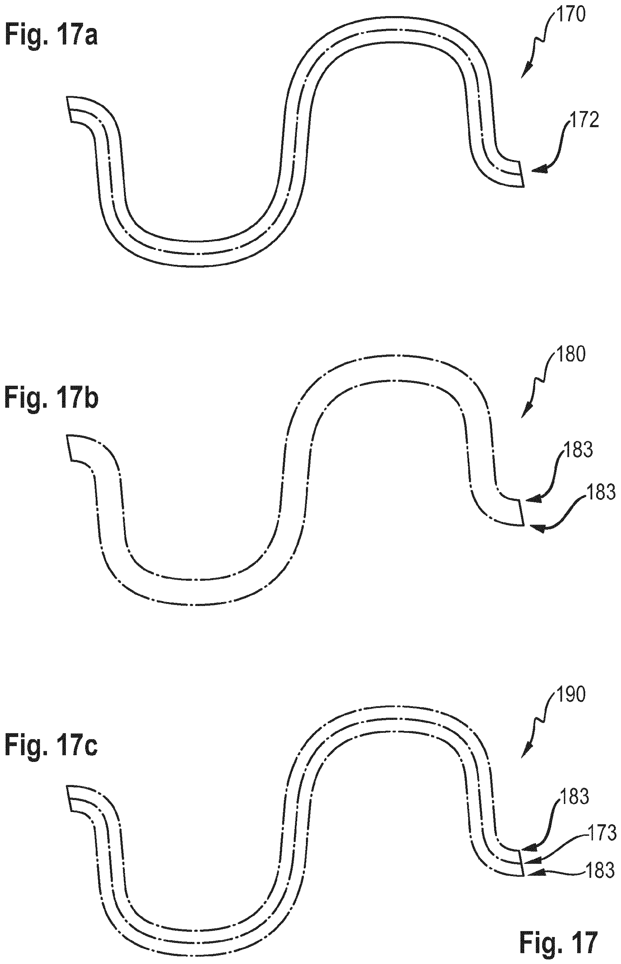

Figur 17 zeigt eine weitere erfindungsgemäßen Ausführungsform einer Biegefeder 170 umfassend eine S-Form beziehungsweise eine Doppel-C-Form, wobei die Biegefeder 170 ein Gewebe oder Gelege 172 in der Mittelebene (Figur 17a) umfasst. Die Biegefeder 180 umfasst ein Gewebe oder Gelege 183 an den Außenseiten (Figur 17b). Die Biegefeder 190 umfasst ein Gewebe oder Gelege 173 in der Mittelebene und ein Gewebe oder Gelege 183 an den Außenseiten (Figur 17c) aufweist.

## Patentansprüche

1. Arbeitsgerät (620), zum Eintreiben eines Befestigungselements in einen Untergrund, umfassend ein Energieübertragungssystem (600), wobei das Energieübertragungssystem (600) einen Energiespeicher zur Speicherung von mechanischer Energie in dem Arbeitsgerät (620) umfasst, wobei der Energiespeicher mindestens eine Biegefeder (20) und ein Verbundmaterial umfasst.

2. Arbeitsgerät (620) nach Anspruch 1, **dadurch gekennzeichnet, dass** der Energiespeicher eine Energiedichte von mindestens 500 J/kg, aufweist.

3. Arbeitsgerät (620) nach einem der vorangegangenen Ansprüche, **dadurch gekennzeichnet, dass** das Energieübertragungssystem (600) mindestens einen Rollenhalter (62) zum Lagern der Biegefeder (20) im Arbeitsgerät (620) umfasst, wobei die Biegefeder (20) eine Lagerkontaktfläche (23) zum Kontaktieren der Biegefeder (20) mit dem Rollenhalter (62) umfasst.

4. Arbeitsgerät (620) nach dem vorangegangenen Anspruch, **dadurch gekennzeichnet, dass** der Rollenhalter (62) ein Lagerelement (63) umfasst, sodass eine relative Bewegung zwischen der Lagerkontaktfläche (23) der Biegefeder (20) und einer Mantelfläche des Lagerelement (63) in einer Umfangsrichtung des Lagerelement (63) möglich ist.

5. Arbeitsgerät (620) nach einem der vorangegangenen Ansprüche, **dadurch gekennzeichnet, dass** das Energieübertragungssystem (600) mindestens einen Stützhalter (65) zum Stützen der Biegefeder (20) im Arbeitsgerät (620) umfasst, wobei die Biegefeder (20) eine Stützkontaktfläche (24) zum Kontaktieren der Biegefeder (20) mit dem Stützhalter (65) umfasst.

6. Arbeitsgerät (620) nach dem vorangegangenen Anspruch, **dadurch gekennzeichnet, dass** der Stützhalter (65) ein Stützelement (64) umfasst, sodass eine relative Bewegung zwischen der Stützkontaktfläche (24) der Biegefeder (20) und einer Mantelfläche des Stützelements (64) in einer Umfangsrichtung des Stützelements (64) möglich ist.

7. Arbeitsgerät (620) nach dem vorangegangenen Anspruch, **dadurch gekennzeichnet, dass** der Stützhalter (65) fest mit einem Gehäuse des Arbeitsgerätes (620) verbunden ist, sodass der Stützhalter (65) im Gehäuse des Arbeitsgerätes (620) fest positioniert ist.

8. Arbeitsgerät (620) nach einem der vorangegangenen Ansprüche, **dadurch gekennzeichnet, dass** die Biegefeder (20) eine erste Außenseite (21) mit einem ersten Krümmungsradius und eine zweite Außenseite (22) mit einem zweiten Krümmungsradius aufweist, wobei die Biegefeder (20) einen Krümmungsabschnitt (27) umfasst, in welchem der erste Krümmungsradius und der zweite Krümmungsradius verschieden sind.

9. Arbeitsgerät (620) nach dem vorangegangenen Anspruch, wobei der Krümmungsabschnitt (27) die Lagerkontaktfläche (23) der Biegefeder (20) und/oder die Stützkontaktfläche (24) der Biegefeder (20) umfasst.

10. Arbeitsgerät (620) nach einem der vorangegangenen Ansprüche **dadurch gekennzeichnet, dass** das Energieübertragungssystem (600) ein Energieübertragungsband (67) und der Energiespeicher mindestens zwei Biegefedern (20) umfasst.

11. Arbeitsgerät (620) nach dem vorangegangenen Anspruch, **dadurch gekennzeichnet, dass** resultierende Kräfte der mindestens zwei Biegefedern (20) an dem Rollenhalter (62) und/oder an dem Stützhalter (65) eine Wirkungsebene W aufspannen, wobei die Längsachse eines Energieübertragungselementes (69') sich zumindest teilweise in dieser Wirkungsebene W befindet.

12. Energiespeicher zur Speicherung von mechanischer Energie in einem Arbeitsgerät (620), wobei der Energiespeicher ein Verbundstoffmaterial mit unidirektionalen Fasern und eine Biegefeder (20) mit einer Lagerkontaktfläche (23) und/oder einer Stützkontaktfläche (24) umfasst.

13. Energiespeicher nach dem vorangegangenen Anspruch, wobei die unidirektionalen Fasern im Bereich der Lagerkontaktfläche (23) und/oder der Stützkontaktfläche (24) entlang eines Kreissegmentes ausgerichtet sind.

14. Energiespeicher nach einem der beiden vorangegangenen Ansprüche, wobei die unidirektionalen Fasern in Richtung einer Zug- und Druckspannung der Biegefeder (20) liegen, **dadurch gekennzeichnet, dass** die Biegefeder (20) mindestens eine Gewebelage (172) und/oder eine Gelegelage (172) aufweist, deren Faserrichtung 45° gegenüber den unidirektionalen Fasern orientiert sind.

15. Energiespeicher nach dem vorangegangenen Anspruch, **dadurch gekennzeichnet, dass** die Gewebelage (183) und /oder die Gelegelage (183) an einer Außenseite der Biegefeder (20) angeordnet ist.
